(19) Europäisches Patentamt
European Patent Office
Office européen des brevets

(11) **EP 2 247 960 B1**

(12) **EUROPÄISCHE PATENTSCHRIFT**

(45) Veröffentlichungstag und Bekanntmachung des Hinweises auf die Patenterteilung:
**27.08.2014 Patentblatt 2014/35**

(51) Int Cl.:
*G01S 13/78* *(2006.01)* *G01S 13/91* *(2006.01)*
*G01S 3/74* *(2006.01)*

(21) Anmeldenummer: **09713706.1**

(22) Anmeldetag: **25.02.2009**

(86) Internationale Anmeldenummer:
**PCT/EP2009/001351**

(87) Internationale Veröffentlichungsnummer:
**WO 2009/106320 (03.09.2009 Gazette 2009/36)**

(54) **VORRICHTUNG UND VERFAHREN ZUR VERBESSERTEN RICHTUNGSSCHÄTZUNG UND DECODIERUNG MITTELS SEKUNDÄRRADARSIGNALEN**

DEVICE AND METHOD FOR THE IMPROVED DIRECTIONAL ESTIMATION AND DECODING BY MEANS OF SECONDARY RADAR SIGNALS

DISPOSITIF ET PROCÉDÉ D'ÉVALUATION DE DIRECTION AMÉLIORÉE ET DE DÉCODAGE AU MOYEN DE SIGNAUX RADAR SECONDAIRES

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **25.02.2008 DE 102008010882**

(43) Veröffentlichungstag der Anmeldung:
**10.11.2010 Patentblatt 2010/45**

(73) Patentinhaber: **iAd Gesellschaft für Informatik, Automatisierung und Datenverarbeitung mbH 90613 Grosshabersdorf (DE)**

(72) Erfinder:
• **HAMPEL, Hermann 90613 Grosshabersdorf (DE)**
• **BEROLD, Ulrich 90427 Nürnberg (DE)**
• **RECK, Christoph 91052 Erlangen (DE)**
• **SCHMIDT, Lorenz-Peter 91093 Hessdorf (DE)**
• **WEINZIERL, Jochen 90449 Nürnberg (DE)**

(74) Vertreter: **Dreykorn-Lindner, Werner Patentanwalt Steinlachstrasse 2 90571 Schwaig (DE)**

(56) Entgegenhaltungen:
**WO-A-2005/010553 US-A- 5 075 694 US-A1- 2008 150 784**

**Beschreibung**

Die Erfindung betrifft gemäß der Patentansprüche 1 und 2 eine Vorrichtung zur verbesserten Richtungsschätzung mittels Sekundärradarsignalen und gemäß Patentanspruch 7 ein Verfahren hierzu.

Primärradar bezeichnet Radaranlagen, die das Radar-Prinzip ausschließlich und unmittelbar umsetzen, d. h. die unmittelbaren (passiven) Echos zuvor ausgestrahlter Hochfrequenzimpulse analysieren. Der Begriff dient der Abgrenzung zum Sekundärradar, einer Technik, bei der aktiv von den erfassten Objekten erzeugte Echos verwendet werden. In der Praxis kommt häufig eine Kombination beider Methoden zum Einsatz (z. B. in der Flugsicherung beim Bodenradar). Primärradaranlagen sind nicht darauf angewiesen, dass ein Objekt aktiv Signale generiert, um es erfassen zu können. Dies ist z. B. im Bereich der Flugsicherung von Bedeutung, da Flugzeuge auch bei ausgefallenem Flugfunktransponder erfassbar sein müssen. Bei Störungen der verwendeten Frequenz können Primärradaranlagen problemlos auf andere Frequenzen wechseln. Bei Sekundärradaranlagen kann ein solcher Wechsel nur dann erfolgreich durchgeführt werden, wenn er auch von den zu erfassenden Objekten vollzogen wird. Primärradar kann nur die aus dem reflektierten Echo ermittelbaren Größen (z. B. Richtung, Entfernung und Geschwindigkeit) feststellen, während der Empfänger bei Sekundärradar weitere Angaben in seine Antwort integrieren kann (z. B. eine Kennung). Primärradaranlagen benötigen eine erheblich höhere Sendeleistung als vergleichbare Sekundärradarsysteme, um die gleiche Reichweite erzielen zu können.

Das Sekundärradarprinzip ist ein Ortungsverfahren mit Laufzeitmessung, das im Gegensatz zur herkömmlichen Radartechnik nicht mit der am Ziel reflektierten Energie, also dem passiven Echo eines Zieles arbeitet, sondern bei dem sich an Bord des Zieles ein aktives Antwortgerät (Transponder) befindet. Bei einem Sekundärradar antworten die Ziele aktiv auf ein empfangenes Radarsignal mit dem Aussenden einer Antwort auf der gleichen oder einer anderen Frequenz. Hierzu wird der Radarimpuls mit einer Antenne empfangen und löst die Ausstrahlung eines charakteristischen "Echos" über die gleiche Antenne aus. Diese Antwort kann eine charakteristische Modulation oder ein Datenpaket sein. Wesentlicher Vorteil des Sekundärradars gegenüber dem Primärradar ist dessen deutlich höhere Reichweite sowie die Möglichkeit der Identifizierung des Zieles. Mit dem Primärradar werden sichere Informationen über Richtung, Höhe und Entfernung der Ziele und das völlig unabhängig vom Ziel gewonnen. Ein Sekundärradar stellt zusätzliche Informationen, wie Kennung, Identifizierung und ebenfalls Höhe der Ziele bereit. Allerdings ist dazu die Mitarbeit des Ziels notwendig. Fehlt diese Mitarbeit, zum Beispiel weil der Transponder defekt ist, so ist das Sekundärradar nicht arbeitsfähig und dieses Flugobjekt wird nicht erkannt. Deshalb arbeiten die meisten Sekundärradargeräte in einer Kombination mit einem Primärradar. Im Jahre 1953 wurde der internationale Standard Mark X formuliert (dieses System war noch sehr einfach strukturiert und arbeitete im Frequenzband 950 bis 1150 MHz auf 12 verschiedenen Kanälen mit einem Frequenzabstand von 17 MHz) und mit vielen Erweiterungen bis in das Jahr 2008 hinein als Grundlage für die zivile Nutzung des Sekundärradars in der Flugsicherung definiert. In älterer Literatur werden noch die Begriffe Super Beacon und Discrete Address Beacon System (DABS) als ehemalige Bezeichnungen für das Mode S- Verfahren im Standard Mark XII verwendet.

In der Regel besteht das Sekundärradarsystem aus zwei Geräten: dem Abfragegerät (Interrogator) und dem Antwortgerät (dem Transponder). In der Luftfahrt sind die Abfragegeräte teilweise Bodenstationen, teilweise kann ein Interrogator wie die Transponder in einem Flugzeug angeordnet sein. Der Interrogator sendet abhängig von der jeweiligen Modulationsart (dem sogenannten Mode) eine beispielsweise mit verschiedenen Impulsen verschlüsselte Abfrage aus. Diese Impulse werden vom Transponder empfangen und ausgewertet. Je nach dem Inhalt der Abfrage wird eine Antwort generiert, wieder verschlüsselt und ausgesendet. Durch die Laufzeitmessung zwischen Sendeimpulsen und dem Antworttelegramm kann die Entfernung zwischen Abfragegerät und Antwortgerät errechnet werden. Durch die im Transponder durch Decodierung und Codierung verursachten Verzögerungen ist diese Entfernungsberechnung nur korrekt, wenn diese zusätzliche Verzögerungszeit bekannt ist. Als Übertragungsprotokoll, welches generell auf 1030 MHz gesendet wird, wird auf dem sogenannten Uplink- Weg (Abfrage von der Bodenstation hoch zum Flugzeug) innerhalb des P6- Impulses eine Impulsmodulation mit differenzieller Phasenumtastung (DPSK) genutzt. Das Antworttelegramm ist bei den meisten Modi 20,3 $\mu$s lang, besteht aus 2 bis 15 Impulsen mit einer Impulsdauer von je 0,45 $\mu$s ($\pm$0,1 $\mu$s), hat durch den verwendeten vierstelligen Oktalcode nur einen Wertevorrat von 4.096 verschiedenen Identifizierungscodes und wird auf der Frequenz 1090 MHz übertragen. Auf dem Downlink- Weg (Antwort vom Flugzeug zum Abfragenden) ist es ungünstig, ebenfalls die differenzielle Phasenumtastung (DPSK) zu verwenden. Die Übertragungssicherheit wird durch die extremen Temperaturschwankungen, denen ein Transponder in großen Flughöhen ausgesetzt wird, ungünstig beeinflusst. Deshalb wird eine weniger anfällige Modulation, die Pulse Position Modulation (PPM) verwendet. Eine Besonderheit der Mode S- fähigen Transponder ist der sogenannte Squitter-Mode, bei dem der Transponder unabhängig von einer Abfrage und in regelmäßigen Abständen zum Beispiel GPS- Position und Identifizierung als Rundspruch sendet (ADS-B Automatic Dependent Surveillance - Broadcast).

Aus der DE 25 38 382 A1 ist eine sogenannte Rundsicht-Sekundärradar-Anlage (SSR-Anlage) bekannt, bei der die Notwendigkeit, eine sich drehende Antenne zum Empfang der abgefragten Transponderantwort vorzusehen, beseitigt ist. Das Verfahren zur Identifizierung und/oder Ortung der Flugzeuge ist dadurch gekennzeichnet, dass zuerst ein Abfrage-Impulspaar zum Abfragen der in einem Streifen des Gebiets befindlichen Transponder abgestrahlt wird, dass die Position eines gesuchten Transponders bestimmt wird, dass ein Unterdrückungsimpulspaar ausgestrahlt wird, das alle bis auf einen gesuchten Transponder in dem Streifen unterdrückt, dass ein zweites Abfrageimpulspaar zum Abfragen des gesuchten Transponders ausgestrahlt wird, wobei der gesuchte Transponder vorzugsweise abgefragt wird, wenn die übrigen Transponder in dem Streifen unterdrückt sind, und dass die von diesem Transponder ausgesendete Antwort zur Identifizierung und/oder Ortung empfangen wird. Eine Ausgestaltung der Erfindung besteht darin, dass die Zeitbeziehung zwischen den Impulsen des ersten Abfrage-Impulspaars in Schritten verändert wird, so dass das vorbestimmte Gebiet in Schritten durchlaufen wird, wobei vorzugsweise vorgesehen ist, dass das vorbestimmte Gebiet in einer Folge von Streifen in einer Richtung und dann in einer Folge von Streifen in der entgegengesetzten Richtung durchlaufen wird. Eine Anordnung zur Durchführung des Verfahrens ist gemäß der einen Ausführungsform gekennzeichnet durch erste und zweite Antennen, die am Rand des vorbestimmten Gebiets im Abstand voneinander angebracht und so angeordnet sind, dass sie ein bestimmtes Paar des ersten Abfrageimpulspaars abstrahlen, und eine dritte Antenne, die am Rand des Gebiets angebracht ist, wobei die dritte und die erste oder die zweite Antenne so angeordnet sind, dass sie bestimmte Unterdrückungsimpulspaare abstrahlen. Eine weitere Anordnung ist gekennzeichnet durch erste und zweite Antennen, die am Rand des bestimmten Gebiets im Abstand voneinander angebracht und so angeordnet sind, dass sie bestimmte Paare des ersten Abfrageimpulspaars abstrahlen, und dritte und vierte Antennen, die am Rand des vorbestimmten Gebiets im Abstand voneinander angebracht sind, wobei die dritten und vierten Antennen so angeordnet sind, dass sie bestimmte Unterdrückungsimpulspaare abstrahlen. Die dritte Antenne kann folglich so angeordnet sein, dass sie die Antwort des gesuchten Transponders empfängt; es können auch wenigstens drei der Antennen so angeordnet sein, dass sie die Antwort des gesuchten Transponders zur Bestimmung seiner Position innerhalb des vorbestimmten Gebiets empfangen. Die Position eines Flugzeugs kann zwar, wie oben beschrieben wurde, aus den Rahmenimpulspaaren einer Transponder-Antwort bestimmt werden, doch kann eine genauere Positionsanzeige erhalten werden, indem vorgesehen wird, dass jede der Antennen die Antwort des ausgewählten Flugzeugs empfängt, und dass zur Feststellung der Position des Flugzeugs ein Dreiseitenverfahren angewendet wird. Eine Erweiterung wird dadurch erhalten, dass eine vierte Antenne vorgesehen wird, die zusammen mit anderen Antennen zum Aussenden der Unterdrückungsimpulse verwendet wird. Auf diese Weise wird eine größere Genauigkeit der Unterdrückung erhalten, wobei wegen des Merkmals der Unempfindlichmachung herkömmlicher Transponder ein relativ geringen Auflösungsvermögen erhalten wird. Dieses Problem des geringen Auflösungsvermögens wird dadurch auf ein Minimum verringert, dass ein Doppelunterdrückungsverfahren angewendet wird, bei dem zunächst alle auf einer gegebenen Hyperbel befindlichen Transponder und dann alle Transponder auf dem Flugplatz unterdrückt werden. Wenn die zunächst unterdrückten Transponder wieder freigegeben werden. (d.h. nach der Kennunterdrückungsperiode von 35 $\mu$s), jedoch vor der Freigabe der übrigen Transponder, wird ein ausgewählter Abschnitt der gegebenen Hyperbel zur Aktivierung der auf diesem Abschnitt befindlichen Transponder abgefragt. Der gesamte Flugplatz kann dadurch abgetastet werden, dass dieser Vorgang wiederholt wird und dass dafür gesorgt wird, dass unterschiedliche Teile der gegebenen Hyperbel nacheinander abgefragt werden und die zeitliche Beziehung der anfänglichen Unterdrückungsimpulse so verändert wird, dass alle anderen Hyperbeln nacheinander abgefragt werden. Durch Vergleich der mit dem Dreiseitenverfahren ermittelten Position mit der Position, auf die die Abfrage gezielt war, ist es möglich, den größten Teil der Störantworten zu eliminieren, die aufgrund von Reflexionen, nicht synchronen Antworten (fruit), unerwünschten Transponderauflösungen (squitter), Modusspiegelungen, Antworten falschen Modus usw. auftreten. Diese Eliminierung hat keinen Einfluss auf die Positionsgenauigkeit der übrigen Antworten.

Weiterhin ist aus der DE 29 11 313 A1 ein Flughafen-Überwachungssystem mit Sekundärradar unter Verwendung von drei am Flugfeldrand aufgestellten Empfängern, mit einer phasengesteuerten Empfangsantenne zur Erzeugung der scharf gebündelten Empfangskeule und mit Errechnung mit Hilfe eines Hyperbelortungsverfahrens bekannt. Um in jedem Falle eine genaue Lokalisierung der sich auf dem Flugfeld befindlichen Flug- und Fahrzeuge mit Identifizierung ermöglichen wird diese Aufgabe dadurch gelöst, dass die von den Antwortstationen ausgehenden Antwortsignale über eine am Flugfeld räumlich von der Abfrage-Antenne, aber ebenfalls scharf bündelnde zweite Antenne, die das Flugfeld auch abtastet, empfangen werden und dass die durch diese beiden Antennen gebildeten Strahlungskeulen so steuerbar sind, dass deren Überschneidungszone nacheinander jeden Punkt des Flugfeldes erfasst und sich somit mit Hilfe dieser Überschneidungszone eine Positionsbestimmung der Flugzeuge o.dgl. durchführen lässt. Alternativ wird die Aufgabe auch dadurch gelöst, dass die von den Antwortstationen ausgehenden Antwortsignale über zwei oder mehr am Flugfeld geeignet verteilte und räumlich von der Abfrageantenne abgesetzte Rundstrahlantennen empfangen werden und dass aus den Laufzeitunterschieden des Antwort-Signals zu den einzelnen Rundstrahlantennen die Position des jeweiligen Flugzeugs o.dgl. mit Hilfe des Hyperbelortungsverfahrens errechnet wird. Eine Verbesserung der Genauigkeit hinsichtlich der Ortsbestimmung wird dadurch erreicht, dass einerseits die von den Antwortstationen ausgehenden Antwortsignale über eine am Flugfeld räumlich von der Abfrage-Antenne abgesetzte, aber ebenfalls scharf bündelnde zweite Antenne, die das Flugfeld auch abtastet, empfangen werden und dass die durch diese beiden Antennen gebildeten Strahlungskeulen so steuerbar sind, dass deren Überschneidungszone nacheinander jeden Punkt des Flugfeldes erfasst und sich somit mit Hilfe dieser Überschneidungszone eine erste Positionsbestimmung der Flugzeuge o.dgl. durchführen lässt und andererseits die von den Antwort-Stationen ausgehenden Antwortsignale über zwei oder mehr am Flugfeld verteilte und räumlich von der Abfrage-Antenne abgesetzte Rundstrahlantennen empfangen werden und dass aus den Lauf-Zeitunterschieden des Antwortsignals zu den einzelnen Rundstrahlantennen die Position des jeweiligen Flugzeugs o.dgl. mit Hilfe des Hyperbelortungsverfahren zusätzlich errechnet wird.

Weiterhin ist aus der DE 38 35 992 A1 ein Kollisionsverhinderungssystem mit Positionsermittlung in einer eigenen Station, das die Positionen der eigenen Station und der anderen Stationen aus SSR-Abfragen und Antworten darauf bestimmt, bekannt. Im Einzelnen wird die anfängliche Position der eigenen Station durch die aktive Messung der Entfernung zu den Transpondern verfügbarer anderer Stationen bestimmt, deren aufeinander folgende Antworten auf die Abfragen der eigenen Station frei von durch die Überlappen von Antworten hervorgerufenen Störungen sind. Eine solche Störung soll hier als Verstümmelung bezeichnet werden. Zur Bestimmung der Identität und der Hohe der anderen Stationen werden unverstümmelte Antworten ausgewählt, und deren Verzögerungen in Bezug auf die diese auslösenden Abfragen sind ein Maß für die direkte Entfernung der anderen Stationen von der eigenen. Um die Entfernungsmessung zu einer identifizierten anderen Station sicherzustellen, sendet die eigene Station einen kurzen Signalzug sich wiederholender Modus-A- und Modus-C-Abfragen und korreliert die sich ergebenden empfangenen Antworten. Für den Fall, dass der Transponder mehr als einer anderen Station verstümmelungsfrei antwortet, wird die zur genauen Bestimmung der Positionen der eigenen und der anderen Stationen am vorteilhaftesten gelegene ausgewählt Es ist keine Folge von Approximationen der eigenen Position notwendig. Jede Störung des bestehenden ATCRBS-Betriebs durch die Abfragen der eigenen Station und die Antworten darauf sind nur vorübergehend und können im wesentlichen vernachlässigt werden. Die Positionen der eigenen und der antwortenden anderen Stationen werden trigonometrisch bestimmt aus den gemessenen Entfernungen und den Azimuthdifferenzen und den Ankunftszeitdifferenzen der Abfragen von dem SSR-Stationen und den unverstümmelten aufeinander folgenden Antworten auf diese von den obengenannten identifizierten Transpondern der anderen Stationen. Nachdem die Position der eigenen Station mittels aktiver Sendungen kombiniert mit passiven Daten bestimmt worden ist werden die Relativpositionen anderer Transponderstationen dann lediglich passiv bestimmt.

Weiterhin ist aus der DE 19720828 A1 ein System mit feststehenden Antennen zur Führung und Kontrolle von Flugzeugen auf Flughafenoberflächen und in der Kontrollzone auf der Basis von Mode S bekannt, bei dem durch die Kombination von Entfernungsmessung und Hyperbelverfahren die Stationen auf dem Flughafen in die Lage versetzt werden, auch die gesamte Kontrollzone für an- und abfliegende Flugzeuge, Flugzeuge beim Circling und Durchstart und in der Platzrunde zu orten, zu identifizieren und mit ihnen zu kommunizieren. Alle beteiligten Stationen benötigen nur feststehende Antennen mit Rundcharakteristik. Die Kombination von mindestens drei Empfangsstationen mit feststehenden Antennencharakteristiken zum Empfang der von den Mode S-Transpondem der Flugzeuge ausgehenden Squitter bzw. Antworten und einer die Flugzeugtransponder abfragenden Sendestation ebenfalls mit feststehenden Antennencharakteristiken lässt eine Einrichtung entstehen, die das Prinzip der Hyperbel- bzw. Pseudorange-Ortung mit dem Prinzip der Zweiwege-Entfernungsmessung derart miteinander verbindet, dass die Flugzeuge sowohl auf dem Roll- und Vorfeld des Flughafens als auch in seiner näheren Umgebung (z. B. Kontrollzone) mit großer Genauigkeit und hoher Erneuerungsrate geortet, eindeutig identifiziert und mit ihnen Daten ausgetauscht werden können. Insbesondere dann, wenn Mittelbereichs- oder Streckenradars den Luftraum über dem Flughafen bzw. Flugplatz in größerer Höhe bedecken, kann auf kostspielige Flughafenradars ASR mit rotierenden Antennen zur Richtungsmessung verzichtet werden. Gegenüber Flughafenradars ASR mit rotierenden, die Richtung messenden Antennen kann die Kombination von Hyperbelverfahren und Entfernungsmessung auch genauere Ortungsergebnisse mit deutlich höhere Erneuerungsraten liefern.

Weiterhin ist aus der DE 103 06 922 B4 eine Vorrichtung zur Überwachung eines Flughafengeländes bei der Radargeräte zum Einsatz kommen, welche eine geringe Bodenclutterempfindlichkeit aufweisen und welche gleichzeitig den Luftraum und den Bodenbereich des Flughafengeländes überwachen. Im einzelnen wird eine Vorrichtung zur Erkennung von Hindernissen und Überwachung von Bewegungen auf und über einem Flughafengelände mit Sensoren geschaffen, wobei ein Sensor ein Radargerät mit mehreren Antennenelementen ist, welche auf einer gekrümmten Oberfläche eines Antennenträgers angebracht sind und zeitlich nacheinander angesteuert werden, wobei die Antennenelemente auf Kreislinien angeordnet sind und wobei eine erste Kreislinie und eine zweite Kreislinie jeweils eine Ebene bilden, wobei die durch die Kreislinien gebildeten Ebenen jeweils senkrecht zueinander stehen und wobei die in einer horizontalen Ebene angeordneten Antennenelemente zur Überwachung des Flughafengeländes im Bodenbereich und die in der dazu senkrechten Ebene angeordneten Antennenelemente zur Überwachung des Luftraums und zur Bestimmung der Flughöhe von an- oder abfliegenden Flugkörpern jeweils nach dem ROSAR-Prinzip ausgewertet werden und ein weiterer Sensor ein ROSAR-Radargerät ist, welches durch Rotation der Antenne eine synthetische Apertur erzeugt, wobei die Vorrichtung auf Start- und Landebahn positioniert ist. Dabei werden die Antennenelemente des ROSAR-Radargeräts zeitlich nacheinander angesteuert und abgetastet. Mittels der in einer ersten horizontalen Ebene angeordneten Antennenelementen wird die Überwachung des Flughafengeländes im Bodenbereich und mittels der in der dazu senkrechten Ebene angeordneten Antennenelemente wird die Überwachung des Luftraums des Flughafens gewährleisten. Außerdem ist es mit der Vorrichtung möglich, die Flughöhen an- oder abfliegender Flugkörper zu bestimmen. Aufgrund der hohen Höhenauflösung der Vorrichtung entfällt im Gegensatz zu bekannten Vorrichtung die Forderung nach Sekundärradar-Transpondern in den zu beobachtenden Flugkörpern. Auch ein am Boden erforderliches Sekundärradar kann eingespart werden.

Weiterhin ist aus DE 10 2005 000 732 A1 ein funkbasiertes Ortungssystem mit synthetischer Apertur, welches gekennzeichnet ist durch

- mittels Messdaten einer Absolutsensorik und einer Relativsensorik erfolgendes Erfassen einer von einer Ausgangsposition ausgehenden Bewegung der mobilen Station,
- mittels der Messdaten erfolgendes Erzeugen einer virtuellen Antenne in Form einer synthetischen Apertur, und
- auf der Grundlage eines Verwendens der synthetischen Apertur erfolgendes aufeinander Fokussieren der mobilen Station auf die ortsfeste Station und/oder umgekehrt.

Durch Verwenden der synthetischen Apertur, durch geeignetes Auswählen der Größe der Apertur und/oder der Amplituden- und/oder Phasengewichtung der Messdaten der Absolutsensorik wird ein Richtverhalten der synthetischen Apertur derart erzeugt, dass deren Richtdiagramm nahezu homogen im Bereich einer Fehlerellipse einer beliebigen vorherigen Positionsmessung liegt.

Schließlich ist aus der US 2005/0024256 A1 ein passives Kollisionsverhinderungssystem und ein Verfahren bekannt, bei dem in einem mit GPS ausgestatteten Beobachterflugzeug die Anworttelegramme von im Überwachungsbereich befindlicher Flugzeuge, welche diese zur Bodenstation senden, ausgewertet werden. Hierzu ist am Beobachterflugzeug ein lineares oder zirkulares Antennenarray mit Richtantennen mit gleichen Antennenabständen angeordnet, wobei die im 1.090 MHz Bereich liegende Ausgangsignale der Antennenelemente jeweils einem Empfänger, welcher mit einem A/D-Wandler verbunden ist, zugeführt werden. Die am Ausgang der A/D-Wandler im komplexen Basisband anliegenden Signale werden einem einzigen digitalen Signalprozessor zugeführt, welcher feststellt, ob ein gültiges Signal der Mode A oder C empfangen wird und welcher alle nicht relevanten Signale herausfiltert. Das am Ausgang des DSP anliegende Signal, welches alle gültigen Information der Mode A oder C, nämlich die jeweiligen Ziel-Transponder ID und Höhe-Daten umfasst, wird zusammen mit den eigenen GPS-Daten über ein USB-Kabel einem am Bord des Beobachterflugzeugs befindliche Laptop, PDA oder Notebook Computer zur weiteren Verarbeitung zugeführt. Die im Laptop, PDA oder Notebook Computer durchgeführte Richtungsschätzung, welche auf den GPS-Daten und den Antworttelegrammen der im Beobachtungsbereich liegenden Zielflugzeuge (Laufzeitmessung zwischen Sendeimpulsen der Bodenstation und dem Antworttelegramm des jeweiligen Zielflugzeug zur Berechnung der Entfernung zwischen Bodenstation und Zielflugzeug) beruht, kann z.B. mittels der Schätzverfahren ESPRIT, MUSIC (Multiple Signal Classification), WSF (Weighted Subspace Fitting) erfolgen und das Ergebnis kann an einem am Bein des Piloten befestigten Display dargestellt werden. In diese Laufzeitberechnung geht die relative Entfernung c zwischen Beobachterflugzeug und Zielflugzeug sowie der Winkel $\alpha$ zwischen der Strecke "Beobächterflugzeug und Bodenstation" und der Strecke "Beobachterflugzeug und Zielflugzeug" (unter Berücksichtigung der Verzögerungszeit für das Erzeugen des Antworttelegramms im jeweiligen Zielflugzeug) ein. Um die Zahl der Empfänger zu reduzieren können auch schaltbare Richtantennen des Antennenarrays vorgesehen werden und der Pilot kann zusätzlich durch ein Sprachsignal, beispielsweise "Zielflugzeug auf 10 Uhr unten und nah" oder "Zielflugzeug auf 2 Uhr oben und nah", oder einen (in der Tonhöhe anschwellenden) Warnton vor dem Zusammenstoß gewarnt werden. Die Genauigkeit der Richtungsschätzung hängt dabei von einer Vielzahl von Faktoren ab, wie Signal-Rauschverhältnis SNR, der Anzahl von Messungen, der Anzahl von Empfangssignalen (Antworttelegrammen), der winkelmäßigen Trennung zwischen den unterschiedlichen Signalen, der Ableitung der Antennen-Muster Antwort in Bezug auf den Winkel, der Abweichung von einem idealen Antennenarray (Herstellungsfehler) und der Möglichkeit der Systemkalibrierung.

Schließlich ist aus der US-A 5,075, 694 ein Kollisionswarnsystem bekannt, welches zur Positionsbestimmung auch die Abfragesignale der Bodenstationen benötigt. Die Richtungsschätzung basiert auf analoger Interferometrie. Dabei erfolgt die Richtungsschätzung durch einen analogen Phasendiskriminator und die von den drei Antennen empfangenen Signale werden mittels eines Superhets auf eine ZF von 30 MHz gemischt Die ZF-Signale von der zweiten Antenne werden dann über einen Leistungsteiler als LO auf eine zweite Mischstufe gegeben. Die aus der ersten Antenne und dritten Antenne generierte ZF wird ebenfalls auf diese zweiten Mischstufen eingespeist. Dadurch wird ZF1 mit ZF2 sowie ZF3 mit ZF2 gemischt. Das Ergebnis dieser Mischung ist ein DC-Anteil, der relativ zum Phasenunterschied der jeweiligen ZF Signale ist. Dieser DC-Anteil wird dann A/D gewandelt und für die Positionsbestimmung weiterverarbeitet.

Wie die vorstehende Würdigung des Standes der Technik aufzeigt sind funkbasierte Ortungssysteme auf der Basis von Sekundärradarsignalen bekannt. Dabei werden einerseits spezielle Empfangssysteme zur Richtungsschätzung und andererseits spezielle Empfangssysteme zur Decodierung von Sekundärradarsignalen benutzt. Insbesondere fehlt eine Sekundärradaranlage, bei der Unzulänglichkeiten der verwendeten Hardware, beispielsweise verkoppelte Antennenelemente, unterschiedliche Fußpunktimpedanzen, abweichende Abstände zwischen den Antennen-Elementen, Fertigungs- und Montagetoleranzen u.a., berücksichtigt werden.

Der Erfindung liegt die Aufgabe zugrunde, ein funkbasiertes Ortungssystem derart auszugestalten, dass eine verbesserte Richtungsschätzung einschließlich Decodierung und auf der Basis von Sekundärradarsignalen ermöglicht wird. Weiterhin soll das Ortungssystem zur Positionsbestimmung erweiterbar sein.

Diese Aufgabe wird, ausgehend von einer Vorrichtung zur Richtungsschätzung und Decodierung mittels Sekundärradarsignalen mit den Merkmalen im Oberbegriff des Patentanspruchs 1, dadurch gelöst, dass diese aufweist:

- einen an eine Steckverbindung des jeweiligen Antennenelements angeschlossenen rauscharmen, linearen Verstärker, welcher das empfangene Sekundärradarsignal im Pegel anhebt,
- ein mit dem rauscharmen Verstärker verbundenes erstes Bandpass-Filter, an dessen Filterausgang ein erster linearer Verstärker zur Verstärkung des bandbegrenzten Signals angeschlossen ist,
- ein an den ersten linearen Verstärker angeschlossener Mischer zur Frequenzumsetzung in einen ZF-Bereich,
- ein an den Mischerausgang angeschlossener zweiter linearer Verstärker zur Verstärkung des Signals im ZF-Bereich,
- ein an den zweiten linearen Verstärker zweites Bandpass-Filter zur Bandbegrenzung des Signals im ZF-Bereich,
- einen an das zweite Bandpass-Filter angeschlossenen ersten Analog-Digital-Umsetzer zur Abtastung und Quantisierung des Filterausgangssignals,
- einen mit den ersten Analog-Digital-Umsetzer verbundenen konfigurierbaren Signalprozessor, welcher zur Regelung der Mischerfrequenz mit einer PLL-VCO-Schaltung verbunden ist, die Daten für die Verarbeitung übernimmt und eine Umsetzung der Daten ins komplexe Basisband sowie eine Verarbeitung der Daten im komplexen Basisband vornimmt, wobei die Verarbeitung der Signale der Antennenelemente parallel erfolgt und
- eine mit den konfigurierbaren Signalprozessoren verbundene Verarbeitungseinheit, welche die Daten von allen Antennenelementen aufsammelt, welche eine Kalibrierung der Vorrichtung über die Antennenelemente hinweg durchführt, wobei die Kalibrierung auch im Betrieb ermöglicht wird und welche die Decodierung sowie die Richtungsschätzung mittels eines subraumbasierten Verfahrens durchführt, derart, dass Richtungsschätzung und Decodierung auch bei Empfang überlagerter Signale mehrerer weiterer Sender zuverlässig möglich ist,
- so dass unterschiedliche Verstärkungen, Phasendifferenzen und Verkopplungen von Antennenelementen in den an die M Antennenelemente angeschlossenen analogen Eingangsstufen sowohl bei der Richtungsschätzung als auch bei der Detektion der empfangenen Funkdaten berücksichtigt werden und die Richtungsschätzung und Decodierung ohne Kenntnis/Auswertung der Abfrage- Signale der Bodenstation erfolgen kann/auskommt.

Weiterhin wird diese Aufgabe wird, ausgehend von einer Vorrichtung zur Richtungsschätzung und Decodierung mittels Sekundärradarsignalen mit den Merkmalen im Oberbegriff des Patentanspruchs 2, dadurch gelöst, dass diese aufweist:

- mindestens zwei aus M Antennenelementen bestehende Arrays,
- einen an eine Steckverbindung des jeweiligen Antennenelements angeschlossenen rauscharmen, linearen Verstärker, welcher das empfangene Sekundärradarsignal im Pegel anhebt,
- ein mit dem rauscharmen Verstärker verbundenes erstes Bandpass-Filter, an dessen Filterausgang ein erster linearer Verstärker zur Verstärkung des bandbegrenzten Signals angeschlossen ist,
- ein an den ersten linearen Verstärker angeschlossener Mischer zur Frequenzumsetzung in einen ZF-Bereich,
- ein an den Mischerausgang angeschlossener zweiter linearer Verstärker zur Verstärkung des Signals im ZF-Bereich,
- ein an den zweiten linearen Verstärker zweites Bandpass-Filter zur Bandbegrenzung des Signals im ZF-Bereich,
- einen an das zweite Bandpass-Filter angeschlossenen ersten Analog-Digital-Umsetzer zur Abtastung und Quantisierung des Filterausgangssignals,
- eine mit den konfigurierbaren Signalprozessoren verbundene Verarbeitungseinheit, welche die Daten von allen Antennenelementen aufsammelt, welche eine Kalibrierung der Vorrichtung über die Antennenelemente hinweg durchfährt, wobei die Kalibrierung auch im Betrieb ermöglicht wird und daraus eine Positionsermittlung mittels Kreuzpeilung vornimmt, derart dass Positionsbestimmung und Decodierung auch bei Empfang überlagerter Signale mehrerer weiterer Sender zuverlässig möglich ist,
- so dass unterschiedliche Verstärkungen, Phasendifferenzen und Verkopplungen von Antennenelementen in den an die M Antennenelemente angeschlossenen analogen Eingangsstufen sowohl bei der Richtungsschätzung als auch bei der Detektion der empfangenen Funkdaten berücksichtigt werden und die Richtungsschätzung und Decodierung ohne Kenntnis/Auswertung der Abfrage- Signale der Bodenstation erfolgen kann/auskommt.

Schließlich wird diese Aufgabe, ausgehend von einem Verfahren zur Richtungsschätzung oder Decodierung von Sekundärradarmit mit den Merkmalen im Oberbegriff des Patentanspruchs 7, dadurch gelöst, dass an die M Antennenelemente, nachfolgend analoge Eingangsstufen mit linearen Verstärkern, Bandpass-Filter, Mischer, Analog-Digital-Umsetzer, konfigurierbare Signalprozessoren angeschlossen sind, dass die Signalprozessoren eine Umsetzung der Daten ins komplexe Basisband sowie eine Verarbeitung der Daten im komplexen Basisband vornehmen, wobei die Verarbeitung der Signale der Antennenelemente parallel erfolgt und mit einer an die Signalprozessoren angeschlossenen Verarbeitungseinheit, dass einer der Signalprozessoren erste und zweite Taktsignale als Zeitnormal für Mischer und A/D-Wandler generiert, dass eine kohärente analoge und digitale Signalverarbeitung in der mit den Signalprozessoren verbundenen Verarbeitungseinheit durchgeführt wird, welche die Daten von allen Antennenelementen aufsammelt, welche eine Kalibrierung der Vorrichtung über die Antennenelemente hinweg durchführt, wobei die Kalibrierung auch im Betrieb ermöglicht wird und welche die Richtungsschätzung mittels eines subraumbasierten Verfahren durchführt, wobei ADS-B Telegramme, welche eine per Standortlokalisierung über Satellit Global Position System GPS an Bord ermittelte Position der Flugzeuge enthalten, als Referenz für diese benutzt werden und dass unterschiedliche Verstärkungen, Phasendifferenzen und Verkopplungen von Antennenelementen in den an die M Antennenelemente angeschlossenen analogen Eingangsstufen sowohl bei der Richtungsschätzung als auch bei der Detektion der empfangenen Funkdaten berücksichtigt werden und die Richtungsschätzung und Decodierung ohne Kenntnis/Auswertung der Abfrage-Signale der Bodenstation erfolgen kann/auskommt.

Weitere Vorteile und Einzelheiten lassen sich der nachfolgenden Beschreibung einer bevorzugter Ausführungsformen der Erfindung unter Bezugnahme auf die Zeichnung entnehmen. In der Zeichnung zeigt:

FIG. 1     das Blockschaltbild einer ersten Ausführungsform,
FIG. 2     das Verkopplungsschema zwischen Antennenelementen,
FIG. 3     die RMSE über Trägeroffset,
FIG. 4     die Ergebnisse simulierter Verkopplung zwischen Antennenelementen,
FIG. 5     die RMSE über die Standardabweichung der Absolutwerte der Verstärkung der Eingangsstufen, genormt auf ihre nominale Verstärkung,
FIG. 6     die RMSE über die Standardabweichung der Phasen der Eingangsstufen, genormt auf $\pi$,
FIG. 7     die RMSE der Richtungsschätzung mit parametrisiertem Simulationsmodell, basierend auf gemessenen Werten der verwendeten Hardware über dem Trägeroffset,
FIG. 8     das Histogramm der Fehler in der Richtungsschätzung mit ESPRIT basierend auf 2000 empfangenen ADS-B Telegrammen,
FIG. 9     das Histogramm der Fehler in der Richtungsschätzung mit NC Unitary ESPRIT basierend auf 2000 empfangenen ADS-B Telegrammen,
FIG. 10    ein schematisches Systembild zur Positionsbestimmung auf Basis der Richtungsschätzungen mehrerer Arrays,
FIG. 11    den Fehler in der Richtungschätzung gegenüber dem Einfallwinkel für ESPRIT basierend auf 14222 ADS-B Telegrammen mit und ohne Kalibrierung und
FIG. 12    das Histogramm der Fehler in der Richtungsschätzung für ESPRIT basierend auf 14222 ADS-B Telegrammen mit und ohne Kalibrierung.

Das Sekundärradar bei 1090 MHz wird zum Zweck der Identifikation und der Übermittlung allgemeiner Flugdaten zwischen Flugobjekten, Bodenfahrzeugen, und Flugsicherung eingesetzt. Gegenwärtige Arbeiten beschäftigen sich mit der Aufgabe seiner Anwendung basierend auf dem Konzept der Multilateration auf den Bereich der Positionsbestimmung auszuweiten.

Die Konstruktion eines Multilaterationssystems ist jedoch eine schwierige Aufgabe. Die Signalankunftszeiten müssen sehr genau bestimmt werden und die exakte Synchronisation aller beteiligter Empfänger ist zu bewerkstelligen. Zusätzlich ist das System empfindlich gegen Intersymbolinterferenz (ISI). Es ist zwar ein Algorithmus aus E. Piracci, N. Petrochilos, and G. Galati, "Single-antenna Prqjection Algorithm to discriminate superimposed Secondary Surveillance Radar Mode S Signals" in EURAD, 2007 bekannt, welcher den Effekt von ISI mindert, dieser beruht jedoch auf einem Datenmodell, welches ausschließlich Mode S Signale berücksichtigt.

Ein Antennenarray zur Richtungs-Schätzung könnte die Leistungsfähigkeit eines Multilaterationssystems verbessern und es für kurze Entfernungen vielleicht sogar ersetzen.

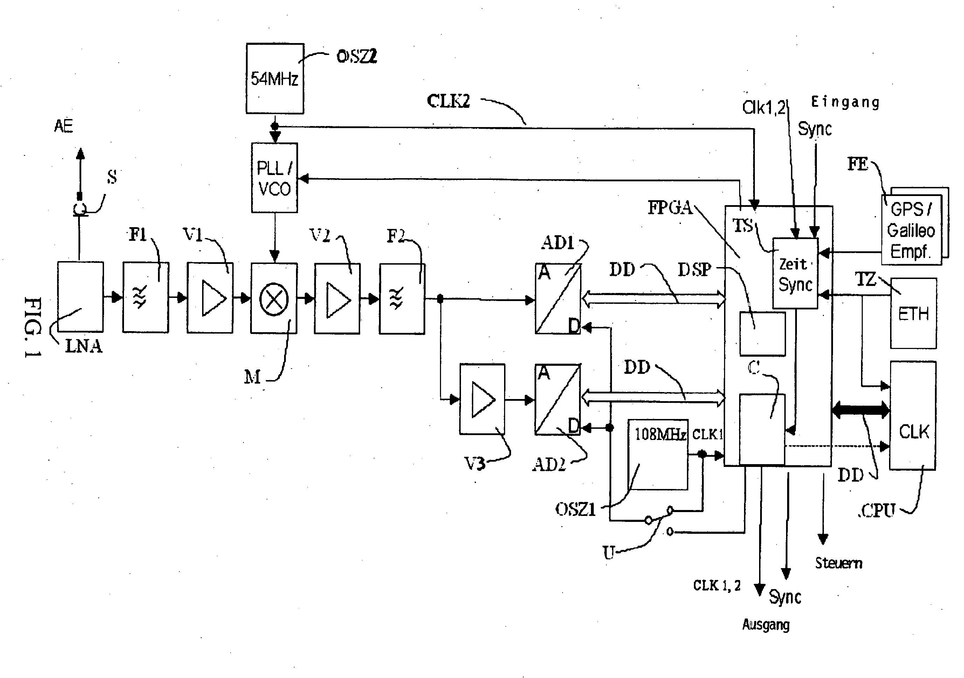

FIG. 1 zeigt das Blockschaltbild einer ersten Ausführungsform einer Vorrichtung zur Richtungsschätzung und/oder Decodierung von Sekundärradarsignalen, welche aufweist:

•    mindestens ein aus M Antennenelementen AE bestehendes Array A,
•    einen an eine Steckverbindung S des jeweiligen Antennenelements AE angeschlossenen rauscharmen, linearen Verstärker LNA, welcher das empfangene Sekundärradarsignal im Pegel anhebt,
•    ein mit dem rauscharmen Verstärker LNA verbundenes erstes Bandpass-Filter F1, an dessen Filterausgang ein erster linearer Verstärker V1 zur Verstärkung des bandbegrenzten Signals angeschlossen ist,
•    ein an den ersten linearen Verstärker V1 angeschlossener Mischer M zur Frequenzumsetzung in einen ZF-Bereich,
•    ein an den Mischerausgang angeschlossener zweiter linearer Verstärker V2 zur Verstärkung des Signals im ZF-Bereich,
•    ein an den zweiten linearen Verstärker V2 zweites Bandpass-Filter F2 zur Bandbegrenzung des Signals im ZF-Bereich,
•    einen an das zweite Bandpass-Filter F2 angeschlossenen ersten Analog-Digital-Umsetzer AD1 zur Abtastung und Quantisierung des Filterausgangssignals,

- einen mit den ersten Analog-Digital-Umsetzer AD1 verbundenen konfigurierbaren Signalprozessor FPGA/DSP, welcher zur Regelung der Mischerfrequenz mit einer PLL-VCO-Schaltung verbunden ist und die Daten für die Verarbeitung übernimmt und
- eine mit den konfigurierbaren Signalprozessoren FPGA/DSP verbundene Verarbeitungseinheit CPU, welche die Daten DD von allen Antennenelementen AE aufsammelt und die Richtungsschätzung mittels eines subraumbasierten Verfahren durchfuhrt,
- so dass unterschiedliche Verstärkungen, Phasendifferenzen und Verkopplungen von Antennenelementen in den an die M Antennenelemente AE angeschlossenen analogen Eingangsstufen sowohl bei der Richtungsschätzung als auch bei der Detektion der empfangenen Funkdaten berücksichtigt werden.

Vorzugsweise ist mit dem zweiten Bandpass-Filter F2 ein dritter linearer Verstärker V3 zur Verstärkung von Signalen niedrigem Pegel verbunden, an welchem ein zweiter Analog-Digital-Umsetzer AD2 angeschlossen ist. Der zweite AD-Wandler AD2 mit entsprechendem Verstärker ist dazu da, die Dynamik des Systems zu erhöhen, da die geforderte Dynamik hier höher als die Dynamik gängiger AD-Wandler ist.

In Weiterbildung der Erfindung besteht das Antennenarray A aus mindestens drei omnidirektionalen Antennenelementen AE, welche mit Ausnahme für MUSIC als lineares Array A mit gleichen Antennenabständen von einer halben Wellenlänge ausgestaltet sind. Das Antennenelement AE ist mit einem Reflektor in Form eines halbierten Rohrs mit dem Durchmesser einer halben Wellenlänge versehen, wodurch sowohl eine Anpassung als auch eine Entkopplung realisiert wird. Alternativ sind die Antennenelemente AE als Rahmenantennen auf einer Trägerplatte ausgestaltet und die Rückseite des Trägers ist mit einer metallischen Oberfläche zur Abschirmung versehen. Zur Zuführung einer Zeitsynchronisierung für die konfigurierbaren Signalprozessoren FPGA/DSP, ist an diese ein Funkempfänger FE (beispielsweise zum Empfang von GPS- oder Galileo-Signalen) und/oder eine drahtgebundene Schnittstellenschaltung TZ (beispielsweise zum Anschluss einer Ethernet-Verbindung) angeschlossen.

Beim erfindungsgemäßen Verfahren generiert einer der Signalprozessoren FPGA erste und zweite Taktsignale CK1, CK2 als Zeitnormal für Mischer M und A/D-Wandler AD1, AD2 und es wird eine kohärente analoge und digitale Signalverarbeitung in der mit den Signalprozessoren FPGA verbundenen Verarbeitungseinheit CPU durchgeführt, welche die Daten DD von allen Antennenelementen AE aufsammelt und die Richtungsschätzung mittels eines subraumbasierten Verfahren durchführt.

Als subraumbasierte Verfahren wird entweder Multiple Signal Classification (MUSIC) oder Estimation of Signal Parameters via Relational Invariance Tech-niques (ESPRIT) oder Non-Circular (NC) Unitary ESPRIT oder Matrix Pencil benutzt. Beim Richtungsschätzverfahren gemäß MUSIC werden die Einfallsrichtungen nicht direkt berechnet, sondern ein sogenanntes Pseudospektrum ermittelt wird, aus welchem die Einfallsrichtungen ermittelt werden. Im Mischer M erfolgt die Mischung ins äquivalente komplexe Basisband sowie nachfolgend eine digitale Tiefpassfilterung. Vorzugsweise werden ADS-B Telegramme, welche eine per Standortlokalisierung über Satellit (Global Position System GPS) an Bord ermittelte Position der Flugzeuge enthalten, als Referenz für diese benutzt. Das erfindungsgemäße Verfahren ist insbesondere durch die Anwendung zur Richtungsschätzung und/oder zur Höhenschätzung gekennzeichnet. Weiterhin werden Positionsinformation und Verlaufsdaten in der Verarbeitungseinheit CPU ausgewertet, die von den Signalprozessoren FPGA als Positionsinformation- Erfassungs/Verarbeitungseinheit erhalten wurden. Die Signalprozessoren FPGA nehmen nach Maßgabe eines definierten Zeitabstands oder beim Erreichen einer vorbestimmbaren Entfernung zwei oder mehrere Positionsdaten auf und senden diese in einem (Daten-) Paket zur Verarbeitungseinheit CPU. Vorzugsweise wird das Datenpaket in der Verarbeitungseinheit CPU in bestimmten Zeitabständen zirkular/zyklisch gespeichert.

Der Ablauf der Signalverarbeitung in der erfindungsgemäßen Vorrichtung zur Richtungsschätzung und/oder Decodierung von Sekundärradarsignalen ist zusammenfassend wie folgt:

- Aufnahme der Signale (bei 1090 MHz) mittels Antennenarray A,
- Lineare Verstärkung (20dB) mit rauscharmem Vorverstärker LNA (evtl. Selektiver Verstärker mit Frequenzbereich um 1090 MHz)
- Filterung mit Bandpassfilter F1 (1090 MHz) und Verstärkung mit Verstärker V1,
- Frequenzumsetzung mit Mischer M auf den Zwischenfrequenzbereich (86MHz). Das Steuersignal (1004 MHz) für den Mischer wird mit Hilfe einer PLL/VCO-Kombination erzeugt.
- Lineare Verstärkung (17dB) mit Verstärker V2 und Filterung mit Bandpassfilter F2 (86MHz)
- Aufspaltung des Signals in zwei Pfade,
- Lineare Verstärkung (45dB) und A/D-Umsetzung mittels erstem A/D-Umsetzer AD1 (16 Bit gleichmäßig, 108 MHz Abtastfrequenz) im ersten Pfad,
- Direkte A/D-Umsetzung mittels zweitem A/D-Umsetzer AD2 (16 Bit gleichmäßig, 108 MHz Abtastfrequenz) im zweiten Pfad,

- Digitale Signalverarbeitung im FPGA: Umsetzung ins komplexe Basisband, Tiefpassfilterung und Datenreduktion sowie Ausgabe an die gemeinsame Verarbeitungseinheit CPU.

Die Verarbeitung zur Ermittlung der Einfallswinkel (Azimut/Elevation) erfolgt erst in der gemeinsamen Verarbeitungseinheit CPU. Die oben genannten Werte der Zwischenfrequenzen, Abtastfrequenzen, Wortbreiten und Verstärkungsfaktoren werden vorzugsweise verwendet, sind jedoch eigentlich freie Parameter hinsichtlich Systemoptimierung. Für die korrekte Funktion des Systems müssen die Steuer-/Taktsignale der Mischer und der A/D-Wandler zwischen den einzelnen Kanälen synchronisiert sein.

Der Empfang von d Ebenen Wellen durch ein aus M Antennenelementen AE bestehendes Array A wird durch die Multiplikation von zwei Matrizen und einen additiven Rauschbeitrag dargestellt:

$$\mathbf{X} = \mathbf{A} \cdot \mathbf{B} + \mathbf{N}. \qquad (1)$$

X (M x N) bezeichnet die Empfangsmatrix und A (M x d) symbolisiert die Strahlformungsmatrix (steering matrix). Für den Fall eines Abstands einer halben Wellenlänge zwischen den Antennenelementen ergibt sich

$$\mathbf{A} = \begin{bmatrix} 1 & 1 & \cdots & 1 \\ e^{j\pi \cdot \sin(\phi_1)} & e^{j\pi \cdot \sin(\phi_2)} & \cdots & e^{j\pi \cdot \sin(\phi_d)} \\ \vdots & \vdots & \cdots & \vdots \\ e^{j\pi \cdot \sin(M\phi_1)} & e^{j\pi \cdot \sin(M\phi_2)} & \cdots & e^{j\pi \cdot \sin(M\phi_d)} \end{bmatrix} \cdot $$

Die Matrix B *(d x N)* enthält die Sendesymbole. Die Winkel $\varphi_n$ mit $d \in \{1, 2,...,d\}$ bezeichnen die Einfallswinkel der empfangenen Signale. Die Matrix N stellt additives Weißes Rauschen dar.

Da der SSR Standard ein zulässiges Trägeroffset von $\pm$ 3 MHz bei Mode A/C vorsieht, ist zusätzlich ein Phasendrift über der Zeit zu beachten. Dieser Phasendrift wird durch die Matrix F (d x N) modelliert. Das Empfangsmodell erweitert sich damit zu

$$\mathbf{X} = \mathbf{A} \cdot (\mathbf{F} \otimes \mathbf{B}) + \mathbf{N}, \qquad (2)$$

wobei $\otimes$ das elementweise Produkt zweier Matrizen darstellt.

Das vorstehende Empfangsmodell setzt ein Antennenarray A aus ideal isotropen Antennenelementen AE gefolgt von kohärenter analoger und digitaler Signalverarbeitung voraus, wobei in der Praxis Richtungsschätzalgorithmen mit einem Array arbeiten müssen, welches verkoppelte Antennenelemente, unterschiedliche Fußpunktimpedanzen und abweichende Abstände zwischen den Elementen aufweist. Fertigungs- und Montagetoleranzen führen zu unterschiedlichen Verstärkungen und Phasendifferenzen (ggfs. variierenden Rauschzahlen) in den analogen Eingangsstufen. Diese Unzulänglichkeiten der verwendeten Hardware müssen im Empfangsmodell berücksichtigt werden. Verkopplung der Antennenelemente, unterschiedliche Fußpunktimpedanzen und variierende Verstärkung bzw. Phasengang können durch die Koppelmatrix C (M x M)

$$C = \begin{bmatrix} c_{11} & c_{12} & \cdots & c_{1M} \\ c_{21} & c_{22} & \cdots & c_{2M} \\ \vdots & \vdots & \cdots & \vdots \\ c_{M1} & c_{M2} & \cdots & c_{MM} \end{bmatrix} \tag{3}$$

dargestellt werden. Die Einträge der Hauptdiagonalen betragen $c_{nn} = 1$ für den Fall ideal kohärenter Analogeingangsstufen für alle Kanäle. Ansonsten nehmen diese Elemente Werte proportional zu ihren kanalspezifischen Verstärkungen und Phasengängen an.

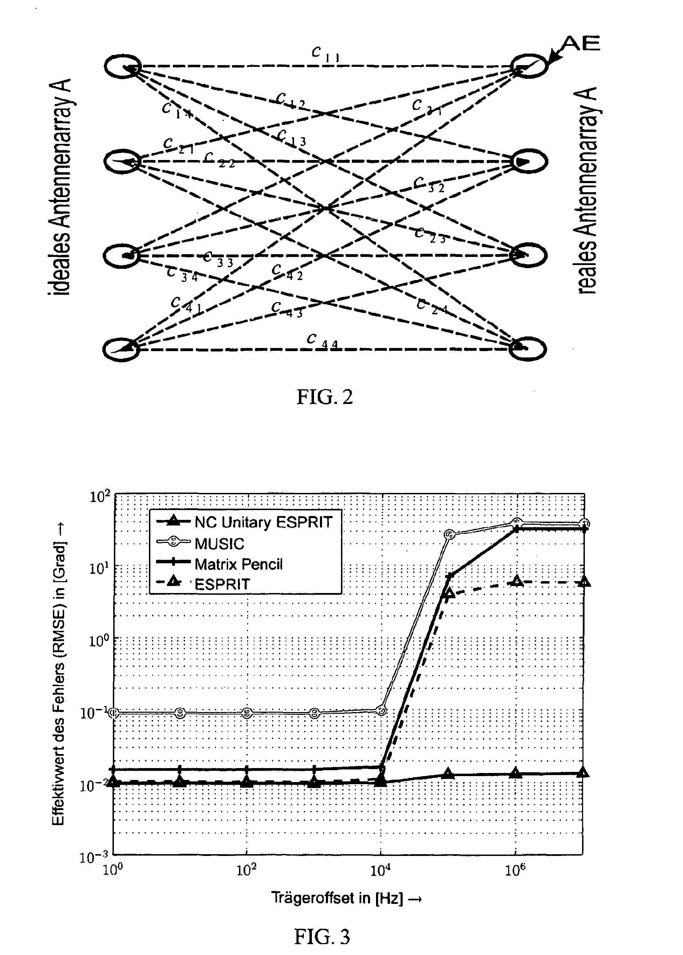

**FIG. 2** zeigt ein Antennenarray aus vier Elementen mit Koppelfaktoren $c_{mn}$, welche das ideale Antennenarray auf ein realitätsnahes Modell abbilden. Das Empfangsmodell entwickelt sich damit zu:

$$X = C \cdot A \cdot (F \otimes B) + N. \tag{4}$$

Die Koppelmatrix C wird beim erfindungsgemäßen Verfahren vorzugsweise durch Kalibrierung ermittelt, die wiederum vorzugsweise mittels Eigenstruktur-Analyse durchgeführt wird.

Die Kalibrierung mittels Eigenstruktur-Analyse basiert auf der Tatsache, dass der beobachtete Strahlformungsvektor einer einzelnen Quelle gegeben ist durch Multiplikation der komplexen Koppelmatrix C mit dem idealen Strahlformungsvektor:

$$A_{estim} = C \cdot A \tag{5}$$

Somit kann der ideale Strahlformungsvektor ermittelt werden, solange C bekannt ist. Andersherum kann C geschätzt werden, falls genügend gleichverteilte ideale Strahlformungsvektoren und ihre korrespondierenden beobachteten Strahlformungsvektoren gegeben sind.

Der Strahlformungsvektor wird geschätzt durch Trennen des dominanten Eigenvektors (Haupteigenvektor) $A_{estim}$ der Kovarianzmatrix $R_{xx}$, die aus einer begrenzten Zahl von Empfangsabtastwerten gebildet wird. Während des Kalibrierungsprozesses wird der Haupteigenvektor verglichen mit seinem korrespondierenden idealen Strahlformungsvektor A. In J. Pierre and M. Kaveh, "Direction-Finding Using a Laboratory Experimental Array Testbed", 5th ASSP Workshop on Spectrum Estimation and Modeling, pp. 114-118, 1990 und "Experimental Performcance of Calibration and Direction-Finding Algorithms", IEEE Int. Conference on Acoustics. Speech and Signal Processing, vol. 2, pp. 1365-1368, 1991 führt dies zum Minimierungsproblem:

$$\min_{C^{-1}} \left\| C^{-1} A_{estim} - A \right\|_F \tag{6}$$

wobei $\|\cdot\|_F$ die Frobenius-Norm bezeichnet. Gemäß S. Kay, Fundamentals of Statistical Signal Processing - Estimation Theory. Prentice Hall, Inc., 1993 kann dieses Problem gelöst werden durch

$$C^{-1} = A A_{estim}^H \left( A_{estim} A_{estim}^H \right)^{-1} \tag{7}$$

In L. Kühnke, "Realisierung und Kalibrierung aktiver Antennensysteme mit digitaler Strahlformung", Ph.D. dissertation, Universität Hannover, 2001 wird darauf hingewiesen, dass dieser Ansatz nur geeignet ist, falls C eine diagonale Matrix bezeichnet (vernachlässigbare Antennenkopplung).

Falls die Antennenkopplung nicht vernachlässigt werden kann und kompensiert werden muss, muss die winkelabhängige Proportionalität zwischen dem idealen Strahlformungsvektor und

Haupteigenvektor $R_{xx}$ betrachtet werden (siehe L. Kühnke, "Realisierung und Kalibrierung aktiver Antennensysteme mit digitaler Strahlformung", a.a.O). Das Minimierungsproblem ergibt sich zu

$$\min_{C,\Lambda} \left\| CA - A_{estim}\Lambda \right\|_F \qquad (8)$$

mit der Proportionalitätsmatrix

$$\Lambda = diag\left\{ g_1, g_2, ..., g_N \right\} = diag\left\{ g \right\} \qquad (9)$$

Analog zu (7) ist die Lösung gegeben durch

$$C = A_{estim}\Lambda A^H \left( AA^H \right) \qquad (10)$$

In C. See, "Sensor Array Calibration in the Presence of Mutual Coupling and Unknown Sensor Gains and Phases", Electronic Letters, vol. 30, pp. 373-374, 1994 wird $\Lambda$ geschätzt durch den kleinsten Eigenwert von

$$\left( \left( A_{estim}^H A_{estim} \right) \square \ P^T \right) z_{min} = \lambda_{min} z_{min} \qquad (11)$$

mit

$$P = E - A^H \left( AA^H \right)^{-1} A \qquad (12)$$

Der entsprechende Eigenvektor $Z_{min}$ wird als Schätzung für den Vektor g verwendet.

Somit ist die Koppelmatrix C für den Fall vernachlässsigbarer Antennenkopplung gegeben durch Gleichung (7), im anderen Fall durch Gleichung (10). Erfolgt die Kalibrierung über mehrere Empfangsvektoren, d.h. über mehrere Strahlformungsvektoren, so erfolgt eine Optimierung der Koppelmatrix C über mehrere Gleichungen (6) bzw. (8).

In L. Kühnke, "Realisierung und Kalibrierung aktiver Antennensysteme mit digitaler Strahlformung", a.a.O wird die Kalibrierung für Anwendungen mit aktiven Antennensystemen betrachtet, die im Frequenzbereich von ca. 12 GHz und mit zweidimensionalen Arrays arbeiten. Die Kalibrierung wird dort in einer Messkammer und damit im Labor vorgenommen. Durch den hohen Frequenzbereich und die dabei sehr niedrigen Wellenlängen im Vergleich zur vorliegenden Anwendung ist dies dort auch möglich. Weiterhin erfolgt in L. Kühnke, "Realisierung und Kalibrierung aktiver Antennensysteme mit digitaler Strahlformung", a.a.O die Kalibrierung nur für eine begrenzte Zahl fester Referenzwinkel (z.B. 4, 8 oder 16), für die jeweils die Auswertung eines Telegramms genügt. In der vorliegenden Anwendung dagegen ist, sofern die Kalibrierung im Feld mit beweglichen Objekten erfolgt, die Kalibrierung auf eine höhere Anzahl mit nahezu beliebigen Einfallswinkeln ausgelegt. Zur Verbesserung der Ergebnisse wird dabei vorzugsweise versucht, möglichst eine Gleichverteilung der in die Kalibrierung einbezogenen Telegramme über den Bereich der für die Kalibrierung sinnvollen Einfallswinkel zu erzielen. Im Gegensatz dazu wird beim Gegenstand der vorliegenden Anmeldung eine Kalibrierung eher im Feld stattfinden sowie mit beweglichen Objekten. Dies hat zum einen den Vorteil, dass dadurch eine häufigere Neukalibrierung möglich ist, da der Aufwand hier deutlich geringer ist (die Vorrichtung kann in der Installation verbleiben). Ein weiterer Vorteil hierbei ist, dass Ungenauigkeiten der Montage bereits mit herauskalibriert werden.

Zur Kalibrierung können prinzipiell verschiedene Quellen herangezogen werden zur Ermittlung der zugehörigen Positionen/Einfallswinkel. Entsprechende Informationen können z.B. aus ADS-B Telegrammen stammen oder aus weiteren Informationen der Luftraumüberwachung (z.B. Primärradar) oder aus Messflügen (mit entsprechender Datenaufzeichnung).

In einer weiteren Form des erfindungsgemäßen Verfahrens (gemäß Anspruch 26) wird als Koppelmatrix C eine Einheitsmatrix verwendet, womit auf den Kalibriervorgang verzichtet werden kann. Hierdurch entfällt vorteilhaft der Aufwand zur Kalibrierung sowie die Speicherung der zugehörigen Daten. Diese vereinfachte Vorgehensweise kann beispielsweise zum Einsatz kommen, wenn die Richtungsschätzung mit niedrigeren Genauigkeiten auskommt.

Die Kenntnis der Matrix F ist zur Anwendung der Algorithmen der Richtungsschätzung basierend auf dem in Gleichung (4) angegebenen Empfangsmodell keine Voraussetzung und dient zur Modellierung der Trägerfrequenzoffsets bzw. der resultierenden Phasendrifts, um die Algorithmen und deren Leistungsfähigkeit miteinander vergleichen zu können.

In den vergangenen drei Jahrzehnten wurden Richtungsschätzalgorithmen weitläufig erforscht und es existiert eine breites Spektrum verschiedener Algorithmen. Für die gegebene Problemstellung, die Einfallsrichtung von SSR Signalen zu bestimmen, wurden erfindungsgemäß vier verschiedene Algorithmen ausgewählt und untersucht:

"Multiple Signal Classification (MUSIC)" von R. O. Schmidt, "Multiple Emitter Location and Signal Parameter Estimation," in IEEE Transactions on Antennas and Propagation, vol. 3, 1986,

"Estimation of Signal Parameters via Relational Invariance Tech-niques (ESPRIT)" von R. Roy and T. Kailath, "ESPRIT - Estimation of Signal Parameters via Rotational Incariance Techniques," in IEEE Transactions on Antennas and Propagation, vol. 7, pp. 984-995, 1989,

"Non-Circular (NC) Unitary ESPRIT" von M. Haardt and F. Roemer, "Enhancements of Unitary Esprit for Non-Circular Sources," in ICASSP Conference, 2004 und

"Matrix Pencil" von Y. Hua and T. Sarkar, "Matrix Pencil Method for Estimating Parameters of Exponentially Damped/Undamped Sinusoids in Noise," IEEE Transactions on Acoustics, Speech and Signal Processing, vol. 38, pp. 814-824, 1990.

NC Unitary ESPRIT wurde zusätzlich zum verwandten ESPRIT untersucht, da es sich auf Signale beschränkt, welche ihr Modulationsalphabet auf einer einzigen Gerade in der Komplexen Ebene konzentriert haben. Dieser spezielle Fall wird von allen rein amplitudenmodulierten Signalen, also auch von SSR Signalen erfüllt.

Es handelt sich bei allen vier Algorithmen um subraumbasierte Verfahren, die im Gegensatz zu spektral basierten Verfahren konsistent sind und gute statistische Eigenschaften besitzen (siehe M. Viberg and H. Krim, "Two Decades of Statistical Array Processing Research," in Signals, Systems & Computers, 1997. Conference Record of the Thirty-First Asilomar Conference on, vol. I, 2-5 Nov. 1997, pp. 775-777 vol.I). Mit Ausnahme von MUSIC benötigen alle Algorithmen ein Lineares Array mit gleichen Antennenabständen (Uniform Linear Array -ULAs). MUSIC berechnet die Einfallsrichtungen nicht direkt, sondern liefert ein sogenanntes Pseudospektrum aus welchem diese erst ermittelt werden müssen. Die hier für die Suche im Pseudospektrum verwendeten Algorithmen sind nicht optimal, was sich in einer Degradation des RMSE (Root Mean Squared Error) auswirkt. Mit einem besseren Suchalgorithmus liefert MUSIC im Fall eines idealen Antennarrays ähnliche Ergebnisse wie ESPRIT.

Beim passiven Kollisionsverhinderungssystem gemäß der US 2005/0024256 A1 wird ein Zero-ZF-Konzept verwendet, d.h. das Eingangssignal wird direkt analog (ggf. auch über eine Zwischenfrequenz) ins Basisband gemischt und erst dort digitalisiert und ins komplexe Basisband konvertiert. Beim Gegenstand der vorliegenden Anmeldung dagegen erfolgt eine analoge Mischung auf eine Zwischenfrequenz, diese wird durch eine AD-Wandler digitalisiert und erst durch den konfigurierbaren Signalprozessor FPGA/DSP ins Basisband konvertiert. Dies hat den deutlichen Vorteil einer höheren Schätzgenauigkeit, da sich, im Gegensatz zur Lösung gemäß der US 2005/0024256 A1, keine unterschiedlichen Verstärkungen und Laufzeiten der I- und Q-Komponenten ergeben. Außerdem basiert das passive Kollisionsverhinderungssystem gemäß der US 2005/0024256 A1 auf Interrogatorsignalen aus einer rotierenden Radarquelle, während im Rahmen der vorliegenden Erfindung auch mit Interrogatorsignalen aus einem Antennenarray gearbeitet werden kann.

Um die Robustheit der Schätzalgorithmen gegen Hardwareeinflüsse und Trägeroffset abzuschätzen, wird nachfolgend nur der Fall eines einzelnen, nicht überlagerten Signals betrachtet. Solange die Algorithmen mit einem Projektionsalgorithmus in Unterräume, wie er beispielsweise in N. Petrochilos, G. Galati, L. Men, and E. Piracci, "Separation of Multiple Secondary Surveillance Radar Sources in a Real Environment," in SAM Conference, 2006 vorgestellt wurde, verwendet werden, stellt dies jedoch keine Einschränkung des allgemeinen Falls dar.

Alle Simulationen basieren auf dem in Gleichung (4) angegebenen Empfangsmodell. Das verwendete Antennenarray A besteht aus vier omnidirektionalen Antennenelementen AE im Abstand einer halben Wellenlänge. Der Störabstand (SNR) ist auf 40 dB festgelegt und es werden 50 Abtastwerte pro Schätzung verwendet. Der Einfallswinkel wird zufällig zwischen 80° und 100° gewählt.

Aus FIG. 3 kann entnommen werden, dass sich die Schätzgenauigkeit bis zu einem Trägeroffset von 10 kHz nicht verschlechtert. Wird dieser Wert überschritten, so sinkt die Genauigkeit bei allen Algorithmen außer bei NC Unitary ESPRIT deutlich, wobei ein maximaler RMSE-Wert bei 1 MHz erreicht wird. Dieses Maximum ist für MUSIC und Matrix Pencil beinahe gleich und liegt zwischen 30° und 40°. Bei ESPRIT liegt der Wert deutlich niedriger bei etwa 6°. NC Unitary ESPRIT zeigt kaum Beeinflussung durch das Trägeroffset und kann somit als optimaler Algorithmus zur Richtungsschätzung eines einzelnen SSR-Signals bezeichnet werden.

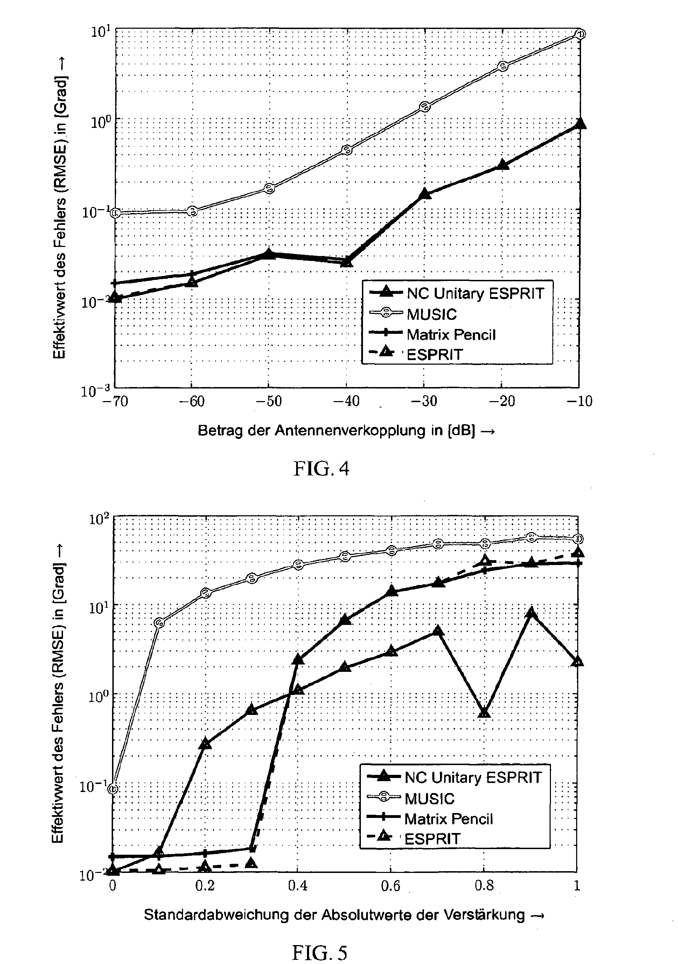

Die Ergebnisse simulierter Verkopplung zwischen Antennenelementen AE ist in der FIG. 4 dargestellt. Die in der Achsenbeschriftung gegebene Verkopplung $C_{neignb}$ in [dB] (Leistungsbezogen) ist zwischen zwei benachbarten Antennenelementen AE definiert. Die Verkopplung mit den zwei weiter entfernten Elementen AE wurde mangels Modell mit den auf unserem realisierten Array gemessenen Werten

$$c_{13} = c_{31} = c_{24} = c_{42} = c_{nejghb} - 6.6 \ [dB]$$

$$c_{14} = c_{41} = c_{neighb} - 19.35 \ [dB]. \qquad\qquad (13)$$

parametrisiert.

Offensichtlich ist keiner der vier Algorithmen robust gegen eine Verkopplung der Antennenelemente AE, wobei alle Algorithmen mit Ausnahme von MUSIC die gleiche Schätzgenauigkeit aufweisen. Trotzdem ist die Abnahme der Schätzgenauigkeit nicht so abrupt wie bei steigendem Trägeroffset und ein RMSE unter 1° ist bis zu einer Verkopplung von $C_{nejghb} = -10$ dB gewährleistet.

Die an die Antennenelemente AE angeschlossenen analogen Eingangsstufen besitzen unterschiedliche komplexwertige Verstärkungsfaktoren. Der Einfluss von unterschiedlichen Absolutwerten der Verstärkung ist in FIG. 5 dargestellt. Die nominale Verstärkung der Eingangsstufen ist auf 1 normiert und mit einem zufälligen gaussverteilten Verstärkungsoffset mit ansteigender Standardabweichung beaufschlagt. MUSIC zeigt sich am wenigsten robust und verliert bereits bei einer Standardabweichung von 0.1 deutlich an Schätzgenauigkeit. NC Unitary ESPRIT beginnt ab 0.1 an Genauigkeit zu verlieren und ESPRIT und Matrix Pencil ab 0.3. Der Einbruch der Schätzgenauigkeit ist jedoch nicht abrupt. Alle Algorithmen bis auf MUSIC überschreiten einen RMSE von 1° etwas unterhalb von 0.4.

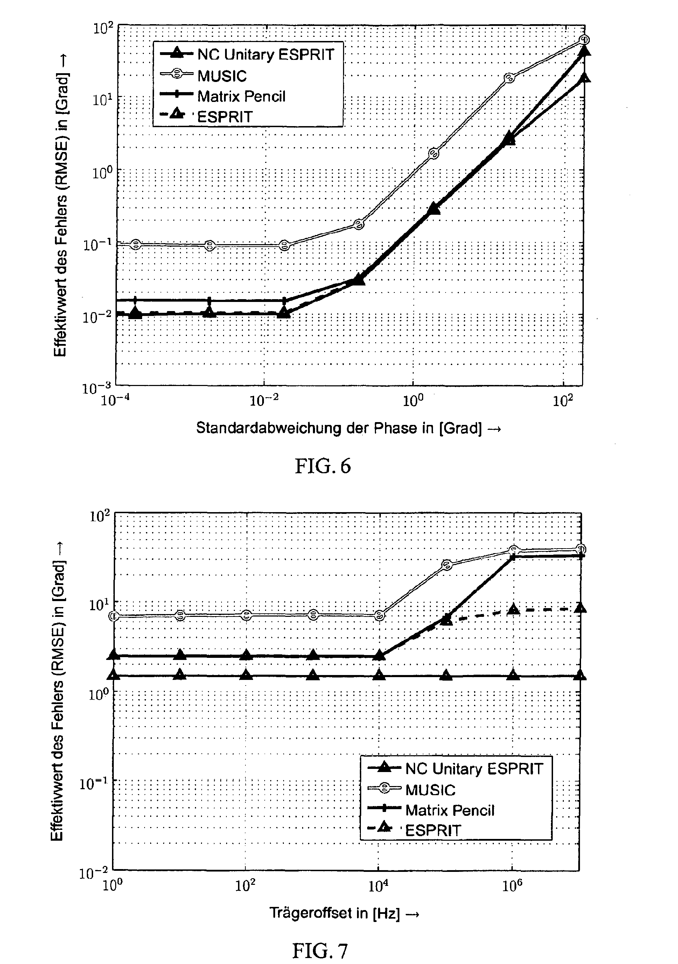

In **FIG. 6** zeigen die Ergebnisse mit inhomogenem Phasengang nahezu gleiche RMSE Ergebnisse für alle Algorithmen außer MUSIC. Alle Algorithmen zeigen sich sehr anfällig bei unterschiedlichem Phasengang. Die Schätzgenauigkeit verschlechtert sich bereits ab einer Standardabweichung von $10^{-4} \cdot \pi$.

Der verwendete Messaufbau basiert auf einem ULA aus sechs Monopolelementen im Abstand einer halben Wellenlänge (in der Zeichnung nicht dargestellt), wobei nur die inneren vier Elemente für die Richtungsschätzung verwendet werden. Die übrigen zwei Elemente werden mit 50 $\Omega$ abgeschlossen und dienen dazu die Charakteristiken der Einzelelemente zu homogenisieren. Jeder der Monopole ist mit einem Reflektor in Form eine halbierten Rohrs mit dem Durchmesser einer halben Wellenlänge versehen. Auf der einen Seite führt der Reflektor zu einer höheren Richtwirkung, auf der anderen Seite wird die Verkopplung der Elemente minimiert. Dadurch wird gute Anpassung und Entkopplung realisiert. Beide Werte liegen bei etwa -17dB.

Gemäß **FIG. 4** sollte ein RMSE von 0.4° mit diesem Antennenarray A erreichbar sein. Das Empfangsmodell wird mit der gemessenen Verkopplungsmatrix unseres Antennenarrays A und den mittels Netzwerkanalysator bestimmten Verstärkungsfaktoren der analogen Eingangsstufen parametrisiert. Da das auftretende Trägeroffset nicht im voraus bekannt ist, wird es als variabel angenommen. Die Ergebnisse der auf dieses Modell angewendeten vier Algorithmen sind in **FIG. 7** zu sehen.

NC Unitary ESPRIT zeigt sich etwas schwächer als ESPRIT und Matrix Pencil solange sich das Trägeroffset unter 10 kHz befindet. Ein möglicher Grund hierfür ist, dass die Genauigkeit von NC Unitary ESPRIT von der inhomogenen Verstärkung der Eingangsstufen dominiert wird (siehe **FIG. 5**), was zu einem RMSE von 0.7° führt. ESPRIT und Matrix Pencil zeigen sich hier robuster mit einem RMSE von 0.3°. Hoher Trägeroffset ist der limitierende Faktor für ESPRIT, Matrix Pencil und MUSIC, während NC Unitary ESPRIT hier eine konstante Schätzgenauigkeit aufweist. MUSIC führt zu Werten über 10° RMSE über alle Werte des Trägeroffsets und scheint damit nur für spezielle Anwendung geeignet zu sein.

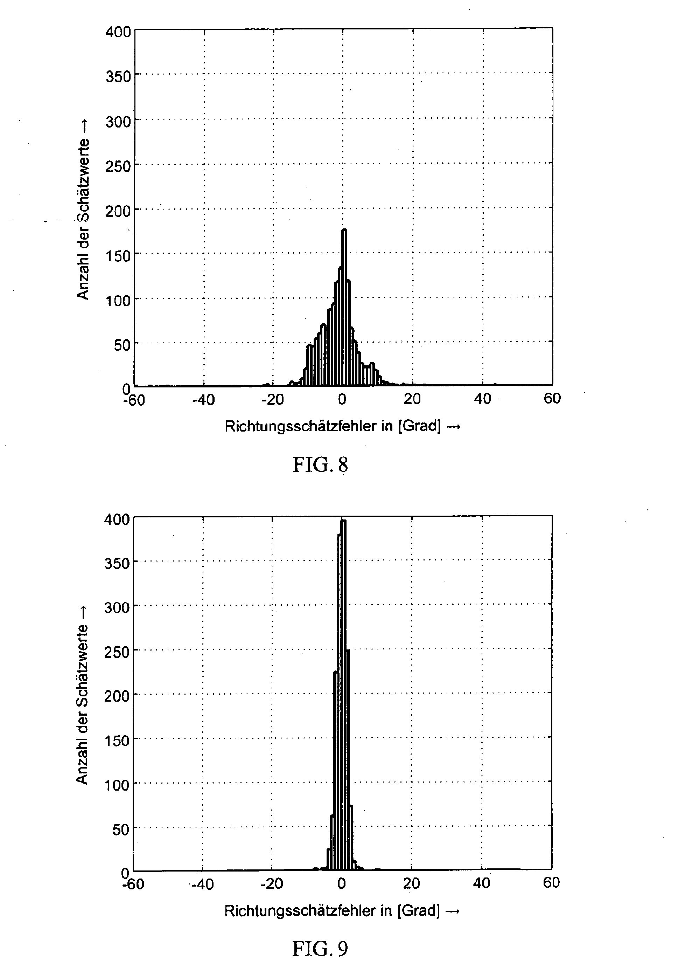

Da ADS-B Telegramme die per GPS an Bord ermittelte Position der Flugzeuge enthalten, eignen sich diese hervorragend als Referenz für Richtungsschätzungen. In einer Messkampagne wurden 2000 Mode S extended squitter ADS-B Telegramme aufgezeichnet. Die vier Algorithmen wurden mit diesem Datensatz getestet. Die Ergebnisse von ESPRIT und NC Unitary ESPRIT sind in **FIG. 8** und **FIG. 9** gezeigt.

Während beide Algorithmen Ausreißer beim Schätzfehler aufweisen, zeigt NC Unitary Esprit eine insgesamt höhere Genauigkeit als ESPRIT. Die Ausreißer könnten von überlagerten Telegrammen herrühren, die jedoch nicht zu ISI im Header des ADS-B Telegramms führen. Das Telegramm wird somit als ADS-B Nachricht identifiziert, die kodierte Position kann jedoch Fehler enthalten. Das Resultat ist eine falsche Referenzrichtung und damit wird unter Umständen ein großer Schätzfehler berechnet.

Um trotzdem einen Vergleich durch RMSE Werte zwischen ESPRIT und NC Unitary ESPRIT zu erhalten wurden lediglich die besten 1900 von den 2000 Richtungsschätzungen berücksichtigt. Bei ESPRIT ergibt sich damit ein RMSE von 6.96°, während bei NC Unitary ESPRIT ein RMSE von 4.45° berechnet wird. Nimmt man ein Trägeroffset von 1 MHz an, so passt das Ergebnis bei ESPRIT recht gut zu den Simulationsergebnissen in FIG. 7. NC Unitary ESPRIT weist jedoch eine deutlich geringere Genauigkeit als die simulierten 0.7° auf.

Durch Simulationen wurde gezeigt, dass Nichtidealitäten der Hardware die erreichbare Schätzgenauigkeit, je nach Algorithmus und betrachtetem Teil der Hardware, unterschiedlich stark beeinflussen. Während ESPRIT und NC Unitary ESPRIT im Bezug auf die Hardware mit einem leichten Vorteil von ESPRIT bei inhomogenen Eingangsstufen recht ähnliche Genauigkeiten aufweisen, zeigt NC Unitary ESPRIT sich robust gegen das vorhandene Trägeroffset.

Der Test mit realen Empfangssignalen bestätigt die Überlegenheit von NC Unitary ESPRIT über ESPRIT im gegebenen Szenario. NC Unitary ESPRIT sollte laut Simulation allerdings einen um 4° geringeren RMSE Wert aufweisen. MUSIC and Matrix Pencil erscheinen aufgrund ihrer geringen Robustheit gegen Trägeroffsets nur für spezielle Anwendung geeignet.

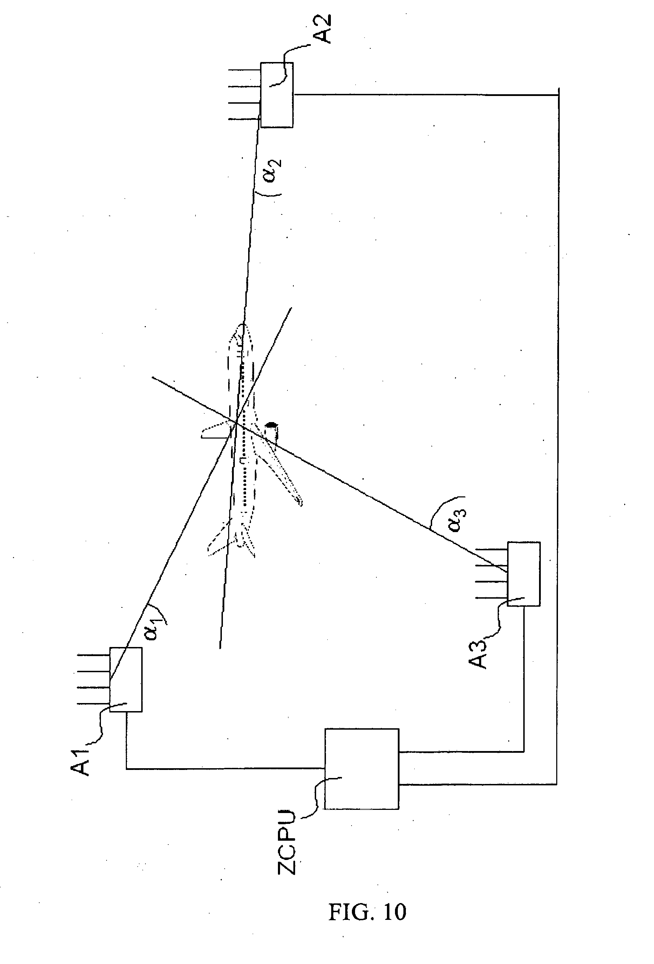

**FIG. 10** veranschaulicht die Positionsbestimmung eines Flugzeugs mittels Kreuzpeilung basierend auf den einzelnen Ergebnissen der Richtungsschätzung mehrerer Antennenarray-Vorrichtungen. Die zentrale Verarbeitungseinheit ZCPU berechnet dabei die Position des Flugzeugs auf Basis der von den einzelnen Arrays gelieferten Richtungswinkel als Schnittpunkt der zugehörigen Standlinien bzw. Flächen (in **FIG. 10** sind der Einfachheit halber nur die Standlinien angedeutet, tatsächlich ergeben sich durch Berücksichtigung von Azimut und Elevation jedoch entsprechende, in der Regel gekrümmte Flächen). Zur Berechnung dieser Kreuzpeilung können dem Fachmann bekannte Verfahren herangezogen werden.

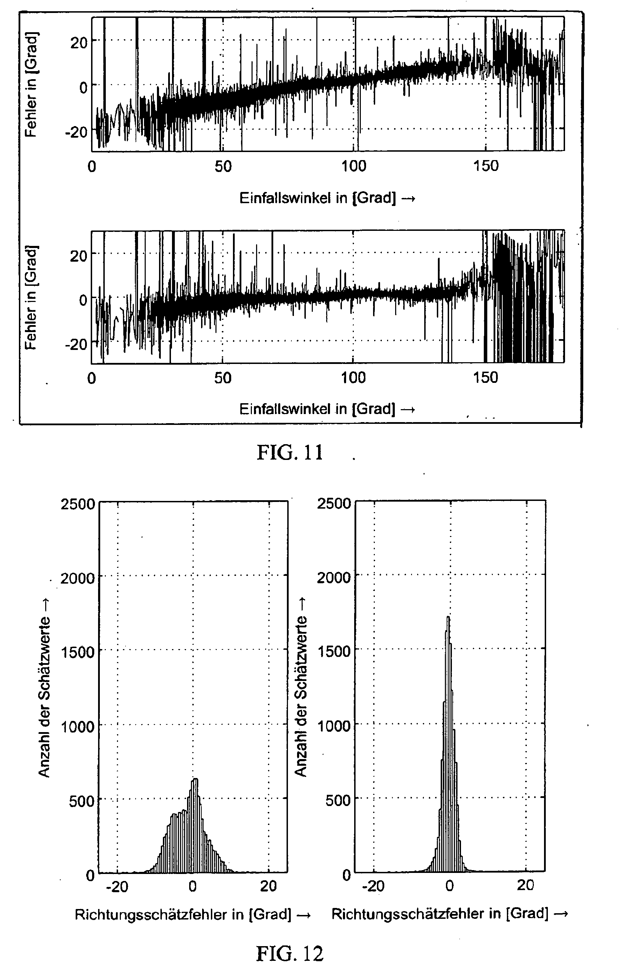

**FIG. 11** und **FIG. 12** veranschaulichen die Verbesserung der Richtungsschätzung mittels Kalibrierung. FIG. 11 zeigt hierzu den Schätzfehler des Einfallswinkels (DOA: Direction of Arrival) gegenüber dem Einfallswinkel bei Verwendung von ESPRIT, hier auf Basis von 14222 empfangenen ADS-B Telegrammen aus dem Luftraum. Das obere Teilbild zeigt das Ergebnis für den unkalibrierten Fall, das untere den kalibrierten Fall. Analog dazu zeigt FIG. 12 die Histogramme für den unkalibrierten (links) bzw. kalibrierten (rechts) Fall bei Verwendung von ESPRIT basierend auf 11642 aus dem Luftraum empfangenen ADS-B Telegrammen, bei denen die Einfallswinkel in einem Bereich von 45° bis 135° lagen. Zur Ermittlung der Kalibriermatrix C wurde hierbei ein zweiter Datensatz von 707 ADS-B Antworten mit Einfallswinkeln von 40° bis 140° verwendet, wobei die Einfallswinkel nur ungefähr gleichverteilt über diesen Winkelbereich waren. Um einen möglichst kleinen Fehler in der DOA-Referenz, verursacht durch Ungenauigkeiten der über ADS-B übermittelten Positionen, zu gewährleisten, wurde für diesen Datensatz ein minimaler Abstand von 30 km für ein Referenzflugzeug gefordert.

**FIG. 11** und **FIG. 12** zeigen eine systematische Reduktion des Fehlers im Vergleich zum unkalibrierten Fall. Während ESPRIT hier im unkalibrierten Fall noch einen Fehler (RMSE: Effektivwert des Fehlerwinkels) von ca. 6° produziert, ist dieser bei Verwendung einer Kalibrierung bereits deutlich auf 2.1° verbessert, also beinahe auf ein Drittel reduziert. Bei NC Unitary ESPRIT wird in dieser Anwendung bereits im unkalibrierten Fall eine genauere Richtungsschätzung erreicht. Aber auch hier wird durch die Kalibrierung noch eine erkennbare Verbesserung erzielt. Der Fehler reduziert sich hierdurch von 1.6° auf 1.08°. Die Genauigkeit der Richtungsschätzung kann weiter verbessert werden, beispielsweise indem zur Kalibrierung spezielle Messflugzeuge herangezogen werden, die verlässlichere Referenzsignale bzw. genauere Positionsdaten liefern.

Neben der Berücksichtigung von Nichtidealitäten der Hardware kann die Kalibrierung auch dazu dienen, Effekte wie Alterung der Komponenten (i.d.R. längerfristig), Temperatur oder Feuchtigkeit (i.d.R. schneller und häufiger schwankend) zu berücksichtigen oder auch Windbelastung, die durch Vibrationen die Positionierung und Strahlformung des Arrays verändern kann. Eine Nutzung von Messflügen zur Kalibrierung ist daher eher geeignet, eine Kalibrierung gegen Alterung durchzuführen (bspw. alle 1-3 Jahre), eine Kalibrierung unter Nutzung von ADS-B Telegrammen oder weiterer Informationen der Luftraumüberwachung (z.B. Primärradar) kann prinzipiell häufiger durchgeführt werden und ermöglicht damit auch die Kalibrierung unter Berücksichtigung von Temperatur und Feuchtigkeit. Hier ist beispielsweise denkbar, für verschiedene Szenarien Kalibriermatrizen zu ermitteln und abzuspeichern und abhängig von den jeweils aktuellen Parametern die relevante Matrix auszuwählen. In diesem Zusammenhang ist dann auch der Einsatz entsprechender Sensoren (z.B. Temperatur, Feuchtigkeit, Wind) im Rahmen der Erfindung möglich. Insbesondere ist die Entwicklung entsprechender Geräte möglich, die auf kostengünstige Geräte und deren Betrieb abzielt, wobei die Geräte dann derart ausgelegt sind, dass eine Berücksichtigung von kurzzeitig schwankenden Parametern - wie Temperatur und Feuchtigkeit - möglichst nicht erforderlich ist, sondern im Wesentlichen nur eine Berücksichtigung von Langzeiteffekten wie Alterung.

Die Erfindung ist nicht auf die dargestellten und beschriebenen Ausführungsbeispiele beschränkt, sondern umfasst auch alle im Sinne der Erfindung gleichwirkenden Ausführungen. Beispielsweise kann im Rahmen der Erfindung auch ein zirkulares Antennenarray mit gleichen Antennenabständen UCA (Uniform Circular Array) benutzt werden.

**Patentansprüche**

1. Vorrichtung zur Richtungsschätzung und Decodierung mittels Sekundärradarsignalen mit mindestens einem aus M Antennenelementen bestehenden Array, einem Bandpass-Filter, einem Mischer, einem Verstärker, einem Analog-Digital-Umsetzer, Signalprozessoren und einer Verarbeitungseinheit, **dadurch gekennzeichnet, dass** diese aufweist:

   • einen an eine Steckverbindung (S) des jeweiligen Antennenelements (AE) angeschlossenen rauscharmen, linearen Verstärker (LNA), welcher das empfangene Sekundärradarsignal im Pegel anhebt,
   • ein mit dem rauscharmen Verstärker (LNA) verbundenes erstes Bandpass-Filter (F1), an dessen Filterausgang ein erster linearer Verstärker (V1) zur Verstärkung des bandbegrenzten Signals angeschlossen ist,
   • ein an den ersten linearen Verstärker (V1) angeschlossener Mischer (M) zur Frequenzumsetzung in einen ZF-Bereich,
   • ein an den Mischerausgang angeschlossener zweiter linearer Verstärker (V2) zur Verstärkung des Signals im ZF-Bereich,
   • ein an den zweiten linearen Verstärker (V2) zweites Bandpass-Filter (F2) zur Bandbegrenzung des Signals im ZF-Bereich,
   • einen an das zweite Bandpass-Filter (F2) angeschlossenen ersten Analog-Digital-Umsetzer (AD1) zur Abtastung und Quantisierung des Filterausgangssignals,
   • einen mit den ersten Analog-Digital-Umsetzer (AD1) verbundenen konfigurierbaren Signalprozessor (FPGA), welcher zur Regelung der Mischerfrequenz mit einer PLL-VCO-Schaltung verbunden ist, die Daten für die Verarbeitung übernimmt und eine Umsetzung der Daten ins komplexe Basisband sowie eine Verarbeitung der Daten im komplexen Basisband vornimmt, wobei die Verarbeitung der Signale der Antennenelemente (AE) parallel erfolgt und
   • eine mit den konfigurierbaren Signalprozessoren (FPGA) verbundene Verarbeitungseinheit (CPU), welche die Daten (DD) von allen Antennenelementen (AE) aufsammelt, welche eine Kalibrierung der Vorrichtung über die Antennenelemente (AE) hinweg durchführt, wobei die Kalibrierung auch im Betrieb ermöglicht wird und welche die Decodierung sowie die Richtungsschätzung mittels eines subraumbasierten Verfahrens durchführt, derart, dass Richtungsschätzung und Decodierung auch bei Empfang überlagerter Signale mehrerer weiterer Sender zuverlässig möglich ist,
   • so dass unterschiedliche Verstärkungen, Phasendifferenzen und Verkopplungen von Antennenelementen in den an die M Antennenelemente (AE) angeschlossenen analogen Eingangsstufen sowohl bei der Richtungsschätzung als auch bei der Detektion der empfangenen Funkdaten berücksichtigt werden und die Richtungsschätzung und Decodierung ohne Kenntnis/Auswertung der Abfrage- Signale der Bodenstation erfolgen kann/auskommt.

2. Vorrichtung zur Richtungsschätzung und Decodierung mittels Sekundärradarsignalen mit mindestens einem aus M Antennenelementen bestehenden Array, einem Bandpass-Filter, einem Mischer, einem Verstärker, einem Analog-Digital-Umsetzer, Signalprozessoren und einer Verarbeitungseinheit, **dadurch gekennzeichnet, dass** diese aufweist:

   • mindestens zwei aus M Antennenelementen (AE) bestehende Arrays (A1, A2, A3),
   • einen an eine Steckverbindung (S) des jeweiligen Antennenelements (AE) angeschlossenen rauscharmen, linearen Verstärker (LNA), welcher das empfangene Sekundärradarsignal im Pegel anhebt,
   • ein mit dem rauscharmen Verstärker (LNA) verbundenes erstes Bandpass-Filter (F1), an dessen Filterausgang ein erster linearer Verstärker (V1) zur Verstärkung des bandbegrenzten Signals angeschlossen ist,
   • ein an den ersten linearen Verstärker (V1) angeschlossener Mischer (M) zur Frequenzumsetzung in einen ZF-Bereich,
   • ein an den Mischerausgang angeschlossener zweiter linearer Verstärker (V2) zur Verstärkung des Signals im ZF-Bereich,
   • ein an den zweiten linearen Verstärker (V2) zweites Bandpass-Filter (F2) zur Bandbegrenzung des Signals im ZF-Bereich,

• einen an das zweite Bandpass-Filter (F2) angeschlossenen ersten Analog-Digital-Umsetzer (AD1) zur Abtastung und Quantisierung des Filterausgangssignals,

• eine mit den konfigurierbaren Signalprozessoren (FPGA) verbundene Verarbeitungseinheit (CPU), welche die Daten (DD) von allen Antennenelementen (AE) aufsammelt, welche eine Kalibrierung der Vorrichtung über die Antennenelemente (AE) hinweg durchführt, wobei die Kalibrierung auch im Betrieb ermöglicht wird und daraus eine Positionsermittlung mittels Kreuzpeilung vornimmt, derart dass Positionsbestimmung und Decodierung auch bei Empfang überlagerter Signale mehrerer weiterer Sender zuverlässig möglich ist,

• so dass unterschiedliche Verstärkungen, Phasendifferenzen und Verkopplungen von Antennenelementen in den an die M Antennenelemente (AE) angeschlossenen analogen Eingangsstufen sowohl bei der Richtungsschätzung als auch bei der Detektion der empfangenen Funkdaten berücksichtigt werden und die Richtungsschätzung und Decodierung ohne Kenntnis/Auswertung der Abfrage- Signale der Bodenstation erfolgen kann/auskommt.

3. Vorrichtung nach Anspruch 1 oder 2, **dadurch gekennzeichnet, dass** mit dem zweiten Bandpass-Filter (F2) ein dritter linearer Verstärker (V3) zur Verstärkung von Signalen niedrigem Pegel verbunden ist, an welchem ein zweiter Analog-Digital-Umsetzer (AD2) angeschlossen ist und dass zur Zuführung einer Zeitsynchronisierung für die konfigurierbaren Signalprozessoren (FPGA), an diese ein Funkempfänger (FE) und/oder eine drahtgebundene Schnittstellenschaltung (TZ) angeschlossen ist.

4. Vorrichtung nach Anspruch 1 oder 2, **dadurch gekennzeichnet, dass** ein Antennenarray (A) mit in der Reihe oder in der Fläche verteilten M Antennenelementen benutzt wird und dass das Antennenarray (A) aus mindestens drei omnidirektionalen Antennenelementen (AE) besteht, welche mit Ausnahme für MUSIC als lineares Array (A) mit gleichen Antennenabständen von einer halben Wellenlänge ausgestaltet sind.

5. Vorrichtung nach Anspruch 4, **dadurch gekennzeichnet, dass** das Antennenelement (AE) mit einem Reflektor in Form eines halbierten Rohrs mit dem Durchmesser einer halben Wellenlänge versehen ist, wodurch sowohl eine Anpassung als auch eine Entkopplung realisiert wird oder dass die Antennenelemente (AE) als Rahmenantennen auf einer Trägerplatte ausgestaltet sind und dass die Rückseite des Trägers mit einer metallischen Oberfläche zur Abschirmung versehen ist.

6. Vorrichtung nach Anspruch 2, **dadurch gekennzeichnet, dass** für M=3 die Array (A1, A2, A3) in Form eines gleichschenkligen Dreiecks und für M=4 die Array (A1, A2, A3) in Form eines Quadrats angeordnet sind.

7. Verfahren zur Richtungsschätzung oder Decodierung von Sekundärradarsignalen, mit einer Vorrichtung mit mindestens einem aus M Antennenelementen bestehenden Array, einem Bandpass-Filter, einem Mischer, einem Verstärker, einem Analog-Digital-Umsetzer, Signalprozessoren und einer Verarbeitungseinheit, **dadurch gekennzeichnet, dass** an die M Antennenelemente (AE), nachfolgend analoge Eingangsstufen mit linearen Verstärkern (LNA, V1, V2, V3), Bandpass-Filter (F1, F2), Mischer (M), Analog-Digital-Umsetzer (AD1, AD2), konfigurierbare Signalprozessoren (FPGA) angeschlossen sind, dass die Signalprozessoren (FPGA) eine Umsetzung der Daten ins komplexe Basisband sowie eine Verarbeitung der Daten im komplexen Basisband vornehmen, wobei die Verarbeitung der Signale der Antennenelemente (AE) parallel erfolgt und mit einer an die Signalprozessoren (FPGA) angeschlossenen Verarbeitungseinheit (CPU), dass einer der Signalprozessoren (FPGA) erste und zweite Taktsignale (CK1, CK2) als Zeitnormal für Mischer (M) und A/D-Wandler (AD1, AD2) generiert, dass eine kohärente analoge und digitale Signalverarbeitung in der mit den Signalprozessoren (FPGA) verbundenen Verarbeitungseinheit (CPU) durchgeführt wird, welche die Daten (DD) von allen Antennenelementen (AE) aufsammelt, welche eine Kalibrierung der Vorrichtung über die Antennenelemente (AE) hinweg durchführt, wobei die Kalibrierung auch im Betrieb ermöglicht wird und welche die Richtungsschätzung mittels eines subraumbasierten Verfahren durchführt, wobei ADS-B Telegramme, welche eine per Standortlokalisierung über Satellit Global Position System GPS an Bord ermittelte Position der Flugzeuge enthalten, als Referenz für diese benutzt werden und dass unterschiedliche Verstärkungen, Phasendifferenzen und Verkopplungen von Antennenelementen in den an die M Antennenelemente (AE) angeschlossenen analogen Eingangsstufen sowohl bei der Richtungsschätzung als auch bei der Detektion der empfangenen Funkdaten berücksichtigt werden und die Richtungsschätzung und Decodierung ohne Kenntnis/Auswertung der Abfrage- Signale der Bodenstation erfolgen kann/auskommt.

8. Verfahren nach Anspruch 7 mit einer Vorrichtung mit mindestens zwei aus M Antennenelementen (AE) bestehende Arrays (A1, A2, A3) und einer mit den Verarbeitungseinheiten (CPU) der Arrays (A1, A2, A3) verbundenen zentralen Verarbeitungseinheit (ZCPU), **dadurch gekennzeichnet, dass** die zentrale Verarbeitungseinheit (ZCPU) die Informationen zur Richtungsschätzung von den verbundenen Verarbeitungseinheiten (CPU) aufsammelt und nach Maßgabe einer Kreuzpeilung eine Positionsermittlung vornimmt und dass im Mischer (M) die Mischung ins äquivalente komplexe Basisband sowie nachfolgend eine digitale Tiefpassfilterung erfolgt.

9. Verfahren nach Anspruch 7, **dadurch gekennzeichnet, dass** beim subraumbasierten Verfahren zur Richtungs- und Positionsschätzung variierende Rauschzahlen berücksichtigt werden, dass als subraumbasierte Verfahren entweder Multiple Signal Classification (MUSIC) oder Estimation of Signal Parameters via Relational Invariance Techniques (ESPRIT) oder Non-Circular (NC) Unitary ESPRIT oder Matrix Pencil benutzt wird und dass beim Richtungsschätzverfahren gemäß MUSIC die Einfallsrichtungen nicht direkt berechnet werden, sondern ein sogenanntes Pseudospektrum ermittelt wird, aus welchem die Einfallsrichtungen ermittelt werden.

10. Verfahren nach Anspruch 7, **gekennzeichnet durch** das Auswerten von Positionsinformation und Verlaufsdaten in der Verarbeitungseinheit (CPU), die von den Signalprozessoren (FPGA) als Positionsinformation-Erfassungs-/Verarbeitungseinheit erhalten wurden, dass die Signalprozessoren (FPGA) nach Maßgabe eines definierten Zeitabstands oder beim Erreichen einer vorbestimmbaren Entfernung zwei oder mehrere Positionsdaten aufnehmen und diese in einem (Daten-) Paket zur Verarbeitungseinheit (CPU) senden und dass das Datenpaket in der Verarbeitungseinheit (CPU) in bestimmten Zeitabständen zirkular/zyklisch gespeichert wird.

11. Verfahren nach Anspruch 7, **dadurch gekennzeichnet, dass** zur Berechnung ein Empfangsmodell gemäß der Gleichung:

$$X = C \bullet A \bullet (F \otimes B) + N$$

benutzt wird,
wobei X (M x N) die Empfangsmatrix; A (M x d) die Strahlformungsmatrix (steering matrix), die Matrix F den Phasenshift bestimmt und C (M x M) die Koppelmatrix bezeichnet und die Matrix B *(d x N)* die Sendesymbole und die Matrix N additives Weißes Rauschen enthält und wobei $\otimes$ das elementweise Produkt zweier Matrizen darstellt und wobei als Koppelmatrix C eine in einem Mittel zur Speicherung enthaltene Einheitsmatrix verwendet wird.

12. Verfahren nach Anspruch 11, **dadurch gekennzeichnet, dass** die Koppelmatrix C durch Kalibrierung ermittelt wird, die wiederum mittels Eigenstruktur-Analyse durchgeführt wird, welche nach Maßgabe einer Multiplikation der komplexen Koppelmatrix C mit dem idealen Strahlformungsvektor gemäß der:

$$A_{estim} = C \cdot A$$

erfolgt, wobei $A_{estim}$ den dominanten Eigenvektor (Haupteigenvektor) einer Kovarianzmatrix $R_{xx}$, welche aus einer begrenzten Zahl von Empfangsabtastwerten gebildet wird, und $A$ den korrespondierenden idealen Strahlformungsvektor bezeichnet.

13. Verfahren nach Anspruch 11 und 12, **dadurch gekennzeichnet, dass** während des Kalibrierungsprozesses der Haupteigenvektor $A_{estim}$ mit seinem korrespondierenden idealen Strahlformungsvektor $A$ verglichen wird und dass das auftretende Minimierungsproblem

$$\min_{C^{-1}} \left\| C^{-1} A_{estim} - A \right\|_F,$$

wobei $\|\cdot\|_F$ die Frobenius-Norm bezeichnet, durch die Gleichung

$$C^{-1} = A A^{H}_{estim} \left( A_{estim} A^{H}_{estim} \right)^{-1}$$

gelöst wird.

**14.** Verfahren nach Anspruch 13, **dadurch gekennzeichnet, dass** bei nicht vernachlässigbarer Antennenkopplung das auftretende Minimierungsproblem

$$\min_{C,\Lambda} \left\| CA - A_{estim}\Lambda \right\|_F,$$

durch die Gleichung

$$C = A_{estim}\Lambda A^H \left( AA^H \right)$$

wobei $\Lambda$ durch den kleinsten Eigenwert von

$$\left( \left( A_{estim}^H A_{estim} \right) \Box\ P^T \right) z_{min} = \lambda_{min} z_{min}$$

mit

$$P = E - A^H \left( AA^H \right)^{-1} A$$

geschätzt wird, wobei $\Box$ das elementweise Produkt zweier Matrizen darstellt und wobei der entsprechenden Eigenvektor $Z_{min}$ als Schätzung für den Vektor g benutzt wird, gelöst wird.

**15.** Verfahren nach Anspruch 11, **dadurch gekennzeichnet, dass** unter Benutzung von Temperatur- und/oder Feuchtigkeitssensoren eine Auswahl unter mehreren gespeicherten Kalibriermatrizen erfolgt.

**Claims**

**1.** A device for directional estimation and decoding by means of secondary radar signals, comprising at least one array comprising M antenna elements, a band-pass filter, a mixer, an amplifier, an analog-to-digital converter, a signal processor and a processing unit, **characterized in that** this device comprises:

  • a low-noise linear amplifier (LNA) that is for raising the received secondary radar signal in the level connected to a plug-in connector (S) of the respective antenna elements (AE) in the array,
  • a first band-pass filter (F1) that is connected to the low noise amplifier (LNA) to whose filter output a first linear amplifier (V1) is connected for amplifying the band-limited signal,
  • a mixer (M) that is connected to the first linear amplifier (V1) for the frequency conversion into an IF range,
  • a second linear amplifier (V2) connected to the mixer output for amplifying the signal in the IF range,
  • a second bandpass filter (F2) connected to the second linear amplifier (V2) for band-limiting the signal in the IF range,
  • a first analog-to-digital converter (AD1) connected to the second band-pass filter (F2) for the sampling and quantization of the filter output signal,
  • a configurable signal processor (FPGA) connected to the first analog-to-digital converter (AD1), said processor (FPGA) being connected to a PLL-VCO circuit for controlling the mixer frequency, receives the data for processing and performing a conversion into a complex base band of said data, whereas the processing of the signals of respective antenna elements (AE) is done parallel and

• a processing unit (CPU) connected to the configurable signal processors (FPGA), said unit (CPU) collects the data (DD) from all the antenna elements (AE), makes a calibration of said device and respective antenna elements (AE), whereas calibrating could be done during operation and carrying out decoding and the directional estimation by means of a method based on a subspace the direction so that both estimating the direction and decoding is always reliable possible during receiving superimposed signals of further transmitter,

• so that various gains, phase differences and coupling of antenna elements in the analog input devices connected to the M antenna elements (AE) are taken into account both in estimating the direction and in the detection of received radio data and that the estimation of direction as well as the decoding can be performed /done without knowledge/evaluation of the interrogation signals of a ground station.

2. A device for directional estimation and decoding by means of secondary radar signals, comprising at least one array comprising M antenna elements, a band-pass filter, a mixer, an amplifier, an analog-to-digital converter, signal processor and a processing unit, **characterized in that** this device comprises:

• at least two arrays (A1, A2, A3) comprised of M antenna elements (AE),

• a low-noise linear amplifier (LNA) that is for raising the received secondary radar signal in the level connected to a plug-in connector (S) of the respective antenna elements (AE) in the array,

• a first band-pass filter (F1) that is connected to the low noise amplifier (LNA) to whose filter output a first linear amplifier (V1) is connected for amplifying the band-limited signal,

• a mixer (M) that is connected to the first linear amplifier (V1) for the frequency conversion into an IF range,

• a second linear amplifier (V2) connected to the mixer output for amplifying the signal in the IF range,

• a second bandpass filter (F2) connected to the second linear amplifier (V2) for band-limiting the signal in the IF range,

• a first analog-to-digital converter (AD1) connected to the second band-pass filter (F2) for the sampling and quantization of the filter output signal,

• a configurable signal processor (FPGA) connected to the first analog-to-digital converter (AD1), said processor (FPGA) being connected to a PLL-VCO circuit for controlling the mixer frequency, receives the data for processing and performing a conversion into a complex base band of said data, whereas the processing of the signals of respective antenna elements (AE) is done parallel and

• a processing unit (CPU) connected to the configurable signal processors (FPGA), said unit (CPU) collects the data (DD) from all the antenna elements (AE), makes a calibration of said device and respective antenna elements (AE), whereas calibrating could be done during operation and also determining the position by means of cross-bearing, so that both estimating the direction and decoding is always reliable possible during receiving superimposed signals of further transmitter,

• so that various gains, phase differences and coupling of antenna elements in the analog input devices connected to the M antenna elements (AE) are taken into account both in estimating the direction and in the detection of received radio data and that the estimation of direction as well as the decoding can be performed /done without knowledge/evaluation of the interrogation signals of a ground station.

3. Device according to claim 1 or 2, wherein a third linear amplifier (V3) is connected to the second band-pass filter (F2) for amplifying low level signals to that amplifier (V3) a second analog-to-digital converter (AD2) is connected and wherein for supplying time synchronization to the configurable signal processors (FPGA) a radio receiver (FE) and/or a wired interface device (TZ) is connected.

4. Device according to claim 1 or 2, wherein an antenna array (A) comprises at least three omnidirectional antenna elements (AE), which are formed - with the exception for MUSIC - as a linear array (A) with equal distances of half a wavelength between the antennas.

5. Device according to claim 4, wherein the antenna elements (AE) are equipped with a reflector in the form of a half way tube with a diameter half a wavelength, where both adapting and decoupling is implemented or wherein the antenna elements (AE) are formed as frame antennas on a supporting plate and a rear side of the supporting plate has a metal surface for shielding.

6. Device according to claim 2, wherein for M = 3 the array (A1, A2, A3) is located in the form of an isosceles triangle, and for M = 4 the array (A1, A2, A3) is located in the form of a square.

7. A method for directional estimation and decoding by means of secondary radar signals, comprising at least one array comprising M antenna elements, a band-pass filter, a mixer, an amplifier, an analog-to-digital converter, signal processor and a processing unit, wherein serial to the M antenna elements (AE) are connected analog input devices with linear amplifiers (LNA, V1, V2, V3), band filters (F1, F2), a mixer (M), analog-to-digital converters (AD1, AD2), configurable signal processors (FPGA), said processor (FPGA) being connected to a PLL-VCO circuit for controlling the mixer frequency, receives the data for processing and performing a conversion into a complex base band of said data, whereas the processing of the signals of respective antenna elements (AE) is done parallel and a processing unit (CPU) connected to said processor (FPGA), wherein generating by one of the signal processors (FPGA) first and second clock signals (CK1, CK2) as a normal time for the mixer (M) and analog-to-digital converter (AD1, AD2), applying a coherent analog and digital signal processing in the processing unit (CPU) connected to the signal processors (FPGA), which collects data (DD) from all antenna elements (AE) and makes a calibration of said device and respective antenna elements (AE), whereas calibrating could be done during operation and carrying out the directional estimation by means of a method based on a subspace, wherein ADS-B messages, which contain the position found by location with a satellite (Global Position System GPS) on board of an airplane, is used as a reference and wherein various gains, phase differences and coupling of antenna elements in the analog input devices connected to the M antenna elements (AE) are taken into account both in estimating the direction and in the detection of received radio data and that the estimation of direction as well as the decoding can be performed /done without knowledge/evaluation of the interrogation signals of a ground station.

8.  The method according to claim 7 comprising a device having at least two arrays (A1, A2, A3) of M antenna elements (AE) and a central processing unit (ZCPU) connected to the processing units (CPU) of the arrays (A1, A2, A3), wherein said central processing unit (ZCPU) collects information for assessment of the direction from said connected processing units (CPU) and carries out cross-finding of the position and wherein an equivalent complex base band is mixed in mixer (M) and then digital low pass filtering takes place.

9.  The method according to claim 8, wherein different numbers of noises are taken into account with a subregionally-based procedure for determining the direction and the position, wherein a subregionally-based procedure selected from the group consisting of Multiple Signal Classification (MUSIC), Estimation of Signal Parameters via Relational Invariance Techniques (ESPRIT), Non-Circular (NC) Unitary ESPRIT and Matrix Pencil is used and wherein in the procedures for assessment of the direction according to MUSIC, directions of supplying are not assessed directly, but a pseudo-spectrum is found and by it the directions are determined.

10. The method according to claim 7, **characterized by** the evaluation of position information and history data in the processing unit (CPU), which were obtained from the signal processors (FPGA) as position information/collecting/processing unit, wherein signal processors (FPGA) in accordance with a defined time interval or upon reaching a predetermined distance occupy two or more position datas and they are sent in one (data) packet to the processing unit (CPU) and wherein the data packet in the processing unit (CPU) is stored at certain time intervals circularly and/or cyclically.

11. The method according to claim 7, wherein for the assessment of a reception model the following equation is used:

$$X = C \bullet A \bullet (F \otimes B) + N$$

where X (M x N) is the reception matrix, A (M x d) is the matrix of beam formation (steering matrix), the matrix F is a phase shift matrix and C (M x M) is the coupling matrix and the matrix B *(d x M)* contains the symbols of the transmission and the matrix N the additional white noise and where $\otimes$ represents the element-wise product of two matrices and wherein a unitary matrix is used as a coupling matrix C, obtained in a storage device.

12. The method according to claim 11, wherein the coupling matrix C is found by calibration, carried out by a self-structure analysis, which is done in accordance with the multiplication of the complex coupling matrix C by the ideal vector for the beam formation, according to:

$$A_{estim} = C \cdot A$$

where $A_{estim}$ is the dominant eigenvector (main eigenvector) of a covariance matrix $R_{xx}$, which is formed by a limited number of reception values and $A$ describes the corresponding ideal vector of beam formation.

**13.** The method of claim 11 and 12, wherein during the process of calibration the main vector $A_{estim}$ is compared with its corresponding ideal vector for beam formation $A$ and the resulting minimization problem

$$\min_{C^{-1}} \left\| C^{-1} A_{estim} - A \right\|_F ,$$

where $\|\cdot\|_F$ describes the Frobenius norm, is solved with the equation

$$C^{-1} = A A_{estim}^H (A_{estim} A_{estim}^H)^{-1}$$

**14.** The method of claim 13, wherein if the antenna coupling occurring is non-negligible, the minimization problem

$$\min_{C,\Lambda} \left\| CA - A_{estim}\Lambda \right\|_F ,$$

is solved by the equation

$$C = A_{estim}\Lambda A^H (AA^H)$$

wherein $\Lambda$ is estimated by the smallest eigenvalue of

$$\left( \left( A_{estim}^H A_{estim} \right) \square\ P^T \right) z_{min} = \lambda_{min} z_{min}$$

with

$$P = E - A^H \left( AA^H \right)^{-1} A$$

and wherein $\square$ correspondents to the product of two matrices element by element and wherein the corresponding eigenvector $Z_{min}$ is used as an estimate for the vector g.

**15.** A method according to claim 11, wherein by the use of temperature sensors and/or humidity sensors a choice is made among several stored calibration matrices.

**Revendications**

**1.** Appareil pour une estimation de la direction et le décodage à l'aide des signaux de radar secondaire, comprenant au moins l'une forme de tableau comprenant des M éléments d'antenne, un filtre passe-bande, un mélangeur, un amplificateur, un convertisseur analogique-numérique, un processeur de signal et une unité de traitement, **caractérisé en ce que** l'appareil comprenant :

   • l'un d'un connecteur (S) de l'élément d'antenne respectif (AE) reliée à l'amplificateur à faible bruit linéaire (LNA), ce qui pose le signal radar secondaire reçu dans le niveau du signal,
   • l'un de l'amplificateur à faible bruit (LNA) connecté au premier filtre passe-bande (F1), à la sortie du filtre, un premier amplificateur linéaire (V1) est relié au gain du signal à bande limitée,

• l'un mélangeur connecté (M) connecté au premier amplificateur linéaire (V1) pour la conversion de fréquence dans une plage IF,

• une à la sortie du mélangeur connecté second amplificateur linéaire (V2) pour amplifier le signal dans la plage IF,

• un second filtre passe-bande (F2) connecté au second amplificateur linéaire (V2) pour la limitation de bande du signal dans la plage IF,

• un premier convertisseur analogique-numérique (AD1) connecté au deuxième filtre passe-bande (F2) pour échantillonner et quantifier le signal de sortie du filtre,

• un processeur configurable de signaux (FPGA) connecté au premier convertisseur (AD1), qui pour commander la fréquence du mélangeur est connecté au VCO d'un circuit PLL, qui prendre les données pour le traitement et mise et traiter les données dans la bande de base complexe et le traitement des signaux de l'élément d'antenne respectif (AE) est effectué en parallèle et l'un des processeurs de signal configurables (FPGA) connecté à l'unité de traitement (CPU), qui collecte des données (DD) à partir de tous les éléments d'antenne (AE) et qui faut procéder au calibrage d'appareil/des éléments d'antenne (AE) dans laquelle la calibrage est possible pendant le fonctionnement et qui effectue le décodage et l'estimation de la direction au moyen d'un procédé sous-région, de sorte que l'estimation de la direction et le décodage même dans la réception de différents émetteurs est fiable possible,

• de sorte que des gains différents, des différences de phase et des raccords d'éléments d'antenne dans les étages d'entrée analogiques connectés aux M éléments d'antenne (AE), sont prises en compte à la fois dans l'estimation la direction ainsi que la détection des données et l'estimation de la direction et le décodage peut être effectuée sans connaissance/évaluation des signaux d'interrogation de la station au sol.

2. Appareil pour une estimation de la direction et le décodage à l'aide des signaux de radar secondaire, comprenant au moins l'une forme de tableau comprenant des M éléments d'antenne, un filtre passe-bande, un mélangeur, un amplificateur, un convertisseur analogique-numérique, un processeur de signal et une unité de traitement, **caractérisé en ce que** l'appareil comprenant :

• au moins deux forme de tableau (A1, A2, A3) comprenant des M éléments d'antenne (AE),

• l'un d'un connecteur (S) de l'élément d'antenne respectif (AE) reliée à l'amplificateur à faible bruit linéaire (LNA), ce qui pose le signal radar secondaire reçu dans le niveau du signal,

• l'un de l'amplificateur à faible bruit (LNA) connecté au premier filtre passe-bande (F1), à la sortie du filtre, un premier amplificateur linéaire (V1) est relié au gain du signal à bande limitée,

• l'un mélangeur connecté (M) connecté au premier amplificateur linéaire (V1) pour la conversion de fréquence dans une fréquence intermédiaire IF,

• une à la sortie du mélangeur connecté second amplificateur linéaire (V2) pour amplifier le signal dans la fréquence intermédiaire IF,

• un second filtre passe-bande (F2) connecté au second amplificateur linéaire (V2) pour la limitation de bande du signal dans la fréquence intermédiaire IF,

• un premier convertisseur analogique-numérique (ADL) connecté au deuxième filtre passe-bande (F2) pour échantillonner et quantifier le signal de sortie du filtre,

• un processeur configurable de signaux (FPGA) connecté à l'unité de traitement (CPU), qui collecte des données (DD) à partir de tous les éléments d'antenne (AE) et qui faut procéder au calibrage d'appareil/des éléments d'antenne (AE) dans laquelle la calibrage est possible pendant le fonctionnement et qui effectue de détermination une position au moins un relèvement de croix, de sorte que détermination une position et le décodage même dans la réception de différents émetteurs est fiable possible,

• de sorte que des gains différents, des différences de phase et des raccords d'éléments d'antenne dans les étages d'entrée analogiques connectés aux M éléments d'antenne (AE), sont prises en compte à la fois dans l'estimation la direction ainsi que la détection des données et l'estimation de la direction et le décodage peut être effectuée sans connaissance/évaluation des signaux d'interrogation de la station au sol.

3. Appareil selon la revendication 1 ou 2, **caractérisé en ce que** un troisième amplificateur linéaire (V3) est reliés au second filtre passe-bande (F2), pour amplifier les signaux de niveau bas, dans lequel un second convertisseur analogique-numérique (AD2) est connecté et **en ce que** pour fournir une synchronisation de temps pour les processeurs de signal configurables (FPGA), pour ce faire, un récepteur radio (FE) et / ou un circuit d'interface câblé (TC) est relié.

4. Appareil selon la revendication 1 ou 2, **caractérisé en ce que** le réseau d'antennes (A) comprend au moins trois éléments d'antenne omnidirectionnelle (AE), qui sont configurés - à l'exception de MUSIC - comme un réseau linéaire (A) avec le même espacement de l'antenne d'une demi-longueur d'onde.

**5.** Appareil selon la revendication 4, **caractérisé en ce que** l'élément d'antenne (AE) est muni d'un réflecteur sous la forme d'un tube coupé en deux avec un diamètre d'une demi-longueur d'onde, ce qui à la fois l'ajustement et un découplage est réalisé ou **en ce que** les éléments d'antenne (AE) sont configurés comme une antenne cadre dans une plaque de support et **en ce que** pour le blindage l'arrière du support est pourvu d'une surface métallique.

**6.** Appareil selon la revendication 2, **caractérisé en ce que** pour M = 3, les tableaux (A1, A2, A3) sont disposés dans la forme d'un triangle isocèle et pour M = 4, les tableaux (A1, A2, A3) sont disposés dans la forme d'un carré.

**7.** Procédé pour estimer la direction ou le décodage à l'aide des signaux de radar secondaire, comprenant au moins l'une forme de tableau comprenant des M éléments d'antenne, un filtre passe-bande, un mélangeur, un amplificateur, un convertisseur analogique-numérique, des processeurs de signal et une unité de traitement, **caractérisé en ce que** reliée à l'élément d'antenne respectif (AE) sont connectés en série des étages d'entrée analogiques avec l'amplificateur à faible bruit linéaire (LNA, V1, V2, V3), des filtres passe-bande (F1, F2), des mélangeurs (M), des convertisseur analogique-numérique (AD1, AD2) et des processeur configurable de signaux (FPGA), qui traiter les données dans la bande de base complexe et fait une traitement des données dans la bande de base complexe, ledit traitement des signaux de l'élément d'antenne (AE) est effectué en parallèle et une l'unité de traitement (CPU) connecté au processeurs de signal configurables (FPGA), **en ce que** l'un des processeurs de signal configurables (FPGA) est généré des premier et second signaux d'horloge (CKL, CK2) en tant que standard de temps pour le mélangeur (M) et des convertisseur analogique-numérique (AD1, AD2), **en ce que** un analogue cohérent et traitement numérique du signal dans les processeurs de signaux (FPGA) connecté à l'unité de traitement (CPU) est effectué, qui collecte des données (DD) à partir de tous les éléments d'antenne (AE) et qui faut procéder au calibrage d'appareil/des éléments d'antenne (AE) dans laquelle la calibrage est possible pendant le fonctionnement et qui effectue l'estimation de la direction au moyen d'un procédé sous-région, **en ce que** des télégrammes ADS-B, qui comprenant la localisation du site et la position déterminée à bord des avions par Satellite Global Position System GPS, ladite télégramme utilisé comme une position de référence et **en ce que** des gains différents, des différences de phase et des raccords d'éléments d'antenne dans les étages d'entrée analogiques connectés aux M éléments d'antenne (AE), sont prises en compte à la fois dans l'estimation la direction ainsi que la détection des données et l'estimation de la direction et le décodage peut être effectuée sans connaissance/évaluation des signaux d'interrogation de la station au sol.

**8.** Procédé selon la revendication 7, comprenant au moins deux forme de tableau (A1, A2, A3) comprenant des M éléments d'antenne (AE) et une unité centrale de traitement (ZCPU) connectées au unités de traitement (CPU) des matrices (A1, A2, A3), **caractérisé en ce que** l'unité centrale de traitement (ZCPU) recueille les informations relatives à l'estimation de la direction des unités de traitement connectées (CPU) et **en ce que** en conformité d'un relèvement de croix fait un calcul de la position et **en ce que** dans le mélangeur (M), le mélange dans la bande de base complexe équivalent et d'un filtrage passe-bas numérique sont effectué ensuite.

**9.** Procédé selon la revendication 7, **caractérisé en ce que** le procédé sous-région pour la direction et la position estimation pris en compte divers niveaux de bruit, **en ce que** comme procédé sous-région l'un classification de signaux multiples (MUSIC) ou l'autre l'estimation des paramètres du signal via relationnelle Invariance techniques (ESPRIT), ou non-circulaire (NC) unitaire ESPRIT ou Matrice Crayon sont utilisés et **en ce que** l'estimation de la direction de procédé selon MUSIC les directions d'incidence ne peut pas être calculée directement, mais que l'on appelle un pseudo-spectre est déterminée à partir de laquelle les directions d'incidence sont déterminées.

**10.** Procédé selon la revendication 7, **caractérisé par** l'évaluation de l'information de position et les données d'historique dans l'unité de traitement (CPU), ces été reçus par des processeurs de signaux (FPGA) comme unité d'informations de position/d'acquisition/de traitement, en ce que les processeurs de signaux (FPGA), conformément à un intervalle de temps défini ou après avoir atteint une distance prédéterminée, enregistrer deux ou plusieurs de données en positions et les envoyer dans une (données) de paquets à l'unité de traitement (CPU) et en ce que le paquet de données est stockés dans l'unité de traitement (CPU) de manière circulairement ou cyclique à des intervalles de temps.

**11.** Procédé selon la revendication 7, **caractérisé en ce que** pour le calcul d'un modèle de réception conformément à l'équation:

$$X = C \cdot A \cdot (F \otimes B) + N$$

est utilisé, où X (M x N) est appelé réseau de réception; A (M x d) est appelé le faisceau formant matrice (matrice de direction), la matrice F défini le déphasage et C (M x M) est appelé la matrice de couplage, et la matrice B *(d x N)* contenant les symboles de transmission et la matrice N contenant de bruit blanc additif, et dans laquelle ⊗ représente le produit élément par élément des deux matrices, et dans laquelle comme matrice de couplage une matrice unité mémorisées dans la mémoire est utilisé.

12. Procédé selon la revendication 11, **caractérisé en ce que** la matrice de couplage C est détermine lors du calibrage qui est effectué à nouveau à l'aide d'une analyse appropriée de la structure, selon lequel, conformément à une multiplication du complexe matrice de couplage C utilisant le vecteur de formation de faisceau idéal conformément à l'équation:

$$A_{estim} = C \cdot A$$

où $A_{estim}$ est appelé le vecteur propre dominant (vecteur propre de principal) d'une matrice de covariance $R_{xx}$, qui est formée à partir d'un nombre limité d'un échantillon de réception, et A appelé le vecteur de formation de faisceau idéal.

13. Procédé selon la revendication 11 et 12, **caractérisé en ce que**, au cours du calibrage le vecteur propre de principal $A_{estim}$ est comparé avec son vecteur de formation de faisceau A idéal et correspondant et **en ce que** la problème de minimisation

$$\min_{C^{-1}} \left\| C^{-1} A_{estim} - A \right\|_F ,$$

étant résoudre par l'équation

$$C = A_{estim} \Lambda A^H (AA^H)$$

où $\left\| \cdot \right\|_F$ désigne la norme de Frobenius.

14. Procédé selon la revendication 13, **caractérisé en ce que**, lorsque le couplage de l'antenne étant non négligeable, le problème de minimisation

$$\min_{C,\Lambda} \left\| CA - A_{estim} \Lambda \right\|_F ,$$

étant résoudre par l'équation

$$C = A_{estim} \Lambda A^H (AA^H)$$

où $\Lambda$ est estimé par la valeur propre plus petite de

$$\left( \left( A_{estim}^H A_{estim} \right) \square \ P^T \right) z_{min} = \lambda_{min} z_{min}$$

avec

$$P = E - A^H \left( A A^H \right)^{-1} A$$

et où □ est le produit de deux matrices par élément et le vecteur propre $Z_{min}$ correspondant est utilisé comme une estimation du vecteur g.

**15.** Procédé selon la revendication 11, **caractérisé en ce qu'**en utilisant la température et/ou des capteurs d'humidité pour fait un choix parmi une pluralité de matrices calibrage stockée.

$$P = E - A^H \left( A A^H \right)^{-1} A$$

FIG. 1

FIG. 2

FIG. 3

FIG. 4

FIG. 5

FIG. 6

FIG. 7

FIG. 8

FIG. 9

FIG. 10

FIG. 11

FIG. 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2538382 A1
- DE 2911313 A1
- DE 3835992 A1
- DE 19720828 A1
- DE 10306922 B4
- DE 102005000732 A1
- US 20050024256 A1
- US 5075694 A

**In der Beschreibung aufgeführte Nicht-Patentliteratur**

- **J. PIERRE ; M. KAVEH.** Direction-Finding Using a Laboratory Experimental Array Testbed. *5th ASSP Workshop on Spectrum Estimation and Modeling,* 1990, 114-118
- Experimental Performcance of Calibration and Direction-Finding Algorithms. *IEEE Int. Conference on Acoustics. Speech and Signal Processing,* 1991, vol. 2, 1365-1368
- **S. KAY.** Fundamentals of Statistical Signal Processing - Estimation Theory. Prentice Hall, Inc, 1993
- Realisierung und Kalibrierung aktiver Antennensysteme mit digitaler Strahlformung. **L. KÜHNKE.** Ph.D. dissertation. 2001
- Sensor Array Calibration in the Presence of Mutual Coupling and Unknown Sensor Gains and Phases. *Electronic Letters,* 1994, vol. 30, 373-374
- Multiple Emitter Location and Signal Parameter Estimation. **VON R. O. SCHMIDT.** IEEE Transactions on Antennas and Propagation. 1986, vol. 3
- ESPRIT - Estimation of Signal Parameters via Rotational Incariance Techniques. **R. ROY ; T. KAILATH.** IEEE Transactions on Antennas and Propagation. 1989, vol. 7, 984-995
- Enhancements of Unitary Esprit for Non-Circular Sources. **VON M. HAARDT ; F. ROEMER.** ICASSP Conference. 2004
- Matrix Pencil Method for Estimating Parameters of Exponentially Damped/Undamped Sinusoids in Noise. **VON Y. HUA ; T. SARKAR.** IEEE Transactions on Acoustics, Speech and Signal Processing. Matrix Pencil, 1990, vol. 38, 814-824
- **M. VIBERG ; H. KRIM.** Two Decades of Statistical Array Processing Research. *Signals, Systems & Computers, 1997. Conference Record of the Thirty-First Asilomar Conference on,* 02. November 1997, vol. I, 775-777
- **N. PETROCHILOS ; G. GALATI ; L. MEN ; E. PIRACCI.** Separation of Multiple Secondary Surveillance Radar Sources in a Real Environment. *SAM Conference,* 2006